# EUROPEAN PATENT APPLICATION

(11) **EP 1 852 452 A1**
(43) Date of publication of application: **07.11.2007**
(21) Application number: 06714451.9
(22) Date of filing: 23.02.2006
(51) Int. Cl.: C08G 59/40, C08L 63/00, C09D 163/00, C09J 163/00

(54) **LATENT HARDENER FOR EPOXY RESIN AND EPOXY RESIN COMPOSITION**

(30) Priority: 23.02.2005 JP 2005046615
(71) Applicant: Asahi Kasei Chemicals Corporation, Tokyo 100-8440 (JP)
(72) Inventor: YAMAMOTO, Hisanao, Tokyo 100-8440 (JP); DAIKAI, Kazuhiro, Tokyo 100-8440 (JP)
(74) Representative: HOFFMANN EITLE
(86) International application number: PCT/JP2006/303311
(87) International publication number: WO 2006/090794

(57) **Abstract**

A subject of the present invention is to provide a one-pot type epoxy resin composition having both high curability and storage stability and a latent hardener for obtaining the same, and to provide anisotropic conductive materials, conductive adhesive materials, insulating adhesive materials, sealing materials, and the like which have high storage stability, solvent resistance and humidity resistance and can provide high connection reliability, adhesive strength and high sealing properties even under curing conditions such as low temperatures or short periods of time. The present invention relates to a latent hardener for epoxy resins in which a hardener (A) for epoxy resins is covered with a film (c1) obtained by reacting an isocyanate component (b1) comprising a low molecular bifunctional aliphatic isocyanate compound in an amount of 1% by mass or more and 95% by mass or less with an active hydrogen compound (b2), and to a one-pot type epoxy resin composition using the same.

## Description

### Technical Field

The present invention relates to a new latent hardener for epoxy resins and a one-pot type epoxy resin composition using the same, more particularly to a latent hardener for epoxy resin compositions which provides a composition having high curability and latency and also excellent in storage stability, solvent resistance and humidity resistance and to a one-pot type epoxy resin composition using the same.

### Background Art

Epoxy resins are in extensive use for paints, electrical insulating materials, adhesives, etc., because hardened products of the resin have excellent performance characteristics in terms of mechanical properties, electrical properties, thermal properties, chemical resistance and adhesiveness. Epoxy resin compositions generally used today are of the so-called two-package composition, in which an epoxy resin and a hardener are mixed together just before use.

Although curable at room temperature, the two-package epoxy resin compositions are bothersome to store and handle, since the epoxy resin and the hardener need to be stored separately and weighed and mixed before use as required.
In addition, the limited pot life of the composition makes it impossible to mix both of the components in large amounts and hence the frequency of mixing them increases and the operation efficiency is inevitably lowered.

Some one-pot type epoxy resin compositions have been proposed for the purpose of solving the problems associated with the two-package ones. For example, there have been proposed compositions of epoxy resins with latent hardeners such as dicyandiamide, BF₃-amine complex, amine salts and modified imidazole compounds.
However, in these latent hardeners, those excellent in storage stability have low curability, requiring high temperature or a long period of time, while those having high curability have low storage stability and needs to be stored at low temperatures such as -20°C. For example, although the compositions of dicyandiamide, when stored at room temperature, have storage stability of at least 6 months, curing temperatures of at least 170°C are necessary. When a curing accelerator is used in combination with dicyandiamide in order to decrease the curing temperature, the curing at, for example, 130°C is possible. On the other hand, such a composition has insufficient storage stability at room temperature and is forced to be stored at low temperatures. Thus, compositions having both high curability and excellent storage stability have been strongly demanded. Further, when a film-type molded article or a product comprising a substrate impregnated with epoxy resin is produced, it is often produced from a composition containing a solvent, a reactive diluent or the like. When a conventional latent hardener is used as a hardener for such a composition, storage stability is extremely lowered. This requires substantially two-package compositions, and improvement thereof has been demanded.

Numbers of researches have been conducted for the demand. For example, hardeners for epoxy resins in which surfaces thereof are covered with reaction products of isocyanate compounds are described in Patent Documents 1 to 3.
However, in recent years, particularly in the electronic equipment field, further improvement in rapid curability, solvent resistance, hardener dispersibility and the like without impairing storage stability has been strongly demanded of one-pot type epoxy resin compositions used as one of the connection materials in order to address improvement in densification and connection reliability of circuits, or in order to use materials having low heat resistance for the weight reduction of mobile equipment, or for the purpose of significantly improving productivity. It was difficult to meet the demand with prior arts.

[Patent Document 1] JP-A-61-190521 1
[Patent Document 2] JP-A-1-70523
[Patent Document 3] JP-A-11-193344

### Disclosure of the Invention

### Problems to be Solved by the Invention

An object of the present invention is to provide a one-pot type epoxy resin composition having both high curability and storage stability and a latent hardener for obtaining the same, and to provide adhesive materials, conductive materials, insulating materials, sealing materials, coating materials, paint compositions, prepregs, structural adhesives, thermal conductive materials and the like which have high storage stability, solvent resistance and humidity resistance and can provide high connection reliability, adhesive strength and high sealing properties even in curing conditions such as low temperatures or short periods of time.

### Means for Solving the Problems

As a result of intensive studies to develop a hardener which overcomes the above noted problems, the inventors have found that a latent hardener for epoxy resins covered with a film having a specific structure is compatible with the above object and have accomplished the present invention.

Specifically, the present invention is as follows.
1) A latent hardener for epoxy resins comprising a hardener (A) for epoxy resins and a resin which covers the hardener (A) for epoxy resins, wherein the resin which covers the hardener (A) for epoxy resins comprises, in a main chain structure thereof, a structure (structure (1)) having two nitrogen atoms separated by a linear or cyclic low molecular aliphatic hydrocarbon group containing no ester linkage, at least one of the nitrogen atoms of the structure (1) forming a urea linkage.
2) The latent hardener for epoxy resins described in 1), the latent hardener for epoxy resins comprising a hardener (A) for epoxy resins and a resin which covers the hardener (A) for epoxy resins, wherein the resin which covers the hardener (A) for epoxy resins comprises, in a main chain structure thereof, a structure (structure (1)) having two nitrogen atoms separated by a linear or cyclic low molecular aliphatic hydrocarbon group containing no oxygen atom other than oxygen atoms forming a urethane linkage, at least one of the nitrogen atoms of the structure (1) forming a urea linkage.
3) The latent hardener for epoxy resins described in 1) or 2), characterized in that the hardener (A) for epoxy resins is covered with a film (c1) obtained by reacting an isocyanate component (b1) comprising a low molecular bifunctional aliphatic isocyanate compound in an amount of 1% by mass or more and 95% by mass or less with an active hydrogen compound (b2).
4) The latent hardener for epoxy resins described in 3), characterized in that the isocyanate component (b1) comprises a low molecular bifunctional aliphatic isocyanate compound (b1-1) in an amount of 1% by mass or more and 95% by mass or less and an aromatic isocyanate compound (b1-2) in an amount of 5% by mass or more and 99% by mass or less.
5) The latent hardener for epoxy resins described in 3) or 4), characterized in that the film (c1) has a group (x) capable of absorbing infrared rays of 1630 cm⁻¹ to 1680 cm⁻¹ in wave length and a group (y) capable of absorbing infrared rays of 1680 cm⁻¹ to 1725 cm⁻¹ in wave length.
6) The latent hardener for epoxy resins described in any of 1) to 5), wherein the hardener (A) for epoxy resins comprises an amine type hardener comprising an amine adduct (a) and a low molecular amine compound (e) as main components.
7) The latent hardener for epoxy resins described in 6), characterized in that the amine adduct (a) is obtained by reacting an epoxy resin (a1) with an amine compound (a2).
8) The hardener for epoxy resins described in 6) or 7), characterized in that the low molecular amine compound (e) is an imidazole.
9) A microcapsule type hardener for epoxy resins characterized by comprising a hardener for epoxy resins and/or a latent hardener for epoxy resins described in any of 1) to 8) as a core which is covered with a shell (c2) obtained by reacting a hardener (A) for epoxy resins with an epoxy resin (C), the microcapsule type hardener for epoxy resins comprising a group (x) capable of absorbing infrared rays of 1630 cm⁻¹ to 1680 cm⁻¹ in wave length and a group (y) capable of absorbing infrared rays of 1680 cm⁻¹ to 1725 cm⁻¹ in wave length at least on the surface thereof.
10) A master batch of hardener composition (F) for epoxy resins characterized in that 10 to 50,000 parts by weight of an epoxy resin (E) is mixed with 100 parts by weight of a hardener for epoxy resins comprising a latent hardener for epoxy resins described in any of 1) to 8) and/or a microcapsule type hardener (D) for epoxy resins described in 9).
11) A master batch of hardener composition for epoxy resins characterized in that the master batch of hardener composition (F) for epoxy resins described in 10) has a total chlorine content of 2,500 ppm or less.
12) The master batch of hardener composition for epoxy resins described in 10) or 11), characterized in that the epoxy resin (E) has a total chlorine content of 2,500 ppm or less.
13) The master batch of hardener composition for epoxy resins described in any of 10) to 12), characterized in that diol terminated impurities of the epoxy resin (E) have 0.001 to 30% by mass of a basic structural component of the epoxy resin (E).
14) An epoxy resin composition in which a cyclic borate ester compound (L) is mixed together with a latent hardener for epoxy resins and/or a microcapsule type hardener (D) for epoxy resins and/or a master batch of hardener composition (F) for epoxy resins described in any of 1) to 13).
15) The epoxy resin composition described in 14), wherein the cyclic borate ester compound (L) is 2,2'-oxybis(5,5'-dimethyl-1,3,2-dioxaborinane).
16) The epoxy resin composition described in 14) or 15), wherein 0.001 to 10 parts by mass of the cyclic borate ester compound (L) described in 14) and/or 15) is mixed with 100 parts by mass of the total amount of the latent hardener for epoxy resins and/or the microcapsule type hardener (D) for epoxy resins and/or the master batch of hardener composition (F) for epoxy resins described in any of 1) to 13).
17) An epoxy resin composition characterized by comprising, as main components, 100 parts by mass of an epoxy resin (J) and 0.001 to 1,000 parts by mass of the latent hardener for epoxy resins and/or the microcapsule type hardener (D) for epoxy resins and/or the master batch of hardener composition (F) for epoxy resins described in any of 1) to 13).
18) An epoxy resin composition characterized in that 0.001 to 10 parts by mass of a cyclic borate ester compound (L) is mixed with 100 parts by mass of an epoxy resin composition described in 17).
19) The epoxy resin composition described in 18), wherein the cyclic borate ester compound (L) is 2,2'-oxybis(5,5'-dimethyl-1,3,2-dioxaborinane).
20) An epoxy resin composition comprising, as main components, 1 to 200 parts by mass of at least one hardener (K) selected from the group consisting of acid anhydrides, phenols, hydrazides and guanidines and 0.1 to 200 parts by mass of a latent hardener for epoxy resins and/or a microcapsule type hardener (D) for epoxy resins and/or a master batch of hardener composition (F) for epoxy resins described in any of 1) to 13).
21) An epoxy resin composition characterized in that 0.001 to 10 parts by mass of a cyclic borate ester compound (L) is mixed with 100 parts by mass of an epoxy resin composition described in 20).
22) The epoxy resin composition described in 21), wherein the cyclic borate ester compound (L) is 2,2'-oxybis(5,5'-dimethyl-1,3,2-dioxaborinane).
23) A paste composition characterized by comprising a master batch of hardener composition for epoxy resins and/or an epoxy resin composition described in any of 10) to 22).
24) A film-type composition characterized by comprising a master batch of hardener composition for epoxy resins and/or an epoxy resin composition described in any of 10) to 22).
25) An adhesive characterized by comprising an epoxy resin composition described in any of 14) to 22).
26) A bonding paste characterized by comprising an epoxy resin composition described in any of 14) to 22).
27) A bonding film characterized by comprising an epoxy resin composition described in any of 14) to 22).
28) A conductive material characterized by comprising an epoxy resin composition described in any of 14) to 22).
29) An anisotropic conductive material characterized by comprising an epoxy resin composition described in any of 14) to 22).
30) An anisotropic conductive film characterized by comprising an epoxy resin composition described in any of 14) to 22).
31) An insulating material characterized by comprising an epoxy resin composition described in any of 14) to 22).
32) A sealing material characterized by comprising an epoxy resin composition described in any of 14) to 22).
33) A coating material characterized by comprising an epoxy resin composition described in any of 14) to 22).
34) A paint composition characterized by comprising an epoxy resin composition described in any of 14) to 22).
35) A prepreg characterized by comprising an epoxy resin composition described in any of 14) to 22).
36) A thermal conductive material characterized by comprising an epoxy resin composition described in any of 14) to 22).

### Advantages of the Invention

The latent hardener of the present invention has high storage stability and curability, while it has effects in pot life, solvent resistance, humidity resistance and dispersibility.

### Best Mode for Carrying Out the Invention

The present invention will be described in detail below.
The latent hardener for epoxy resins of the present invention is characterized by being covered with a resin having a structure (1) in which two nitrogen atoms in the main chain structure thereof, at least one of the nitrogen atoms forming a urea linkage, are linked through a linear or cyclic low molecular aliphatic hydrocarbon group containing no ester linkage.

In the present invention, in the linear or cyclic low molecular aliphatic hydrocarbon group containing no ester linkage in the main chain structure between a nitrogen atom contained in the urea linkage and the other nitrogen atom present in the same molecular chain, the number of carbon atoms contained in the molecular chain from the urea linkage to the other nitrogen atom is preferably from 1 to 18. If the number of carbon atoms is larger than 18, pot life, dispersibility of a hardener and humidity resistance may not be sufficiently exhibited. From such a viewpoint, the number of carbon atoms is preferably from 1 to 12, more preferably from 1 to 9.
The main chain structure as described herein refers to a structure other than a side chain excluding a branch point in a structural chain which couples the two nitrogen atoms including the nitrogen atom forming a urea linkage. Further, the structure starting from the branch point refers to a structural chain comprising a bond structure containing a nitrogen atom ahead of the branch point.

Moreover, in order to efficiently cover the surface of the hardener (A) for epoxy resins, the resin covering the hardener is characterized in that two nitrogen atoms, at least one of which forms a urea linkage, are contained in the compound having a structure linked through a linear or cyclic low molecular aliphatic hydrocarbon group containing no ester linkage in the main chain structure thereof.
In a compound having three or more nitrogen atoms, functional groups having respective nitrogen atoms may have different reactivity. As a result, it may become difficult to control the reaction to form a resin covering a hardener surface and may impair storage stability, humidity resistance, and dispersibility of the hardener.

Moreover, in the present invention, the structure (1), in which two nitrogen atoms are linked through a linear or cyclic low molecular aliphatic hydrocarbon group, is characterized by containing no oxygen atom other than oxygen atoms forming a urethane linkage in the main chain structure between the nitrogen atoms present in the same molecular chain. Examples of structures present in such a structure include an ester structure and an ether structure. If such a structure is contained, pot life, solvent resistance and humidity resistance are not sufficiently exhibited.
Here, when the nitrogen atom other than that forming a urea linkage of the two nitrogen atoms belonging to the structure (1) forms any linkage selected from a urethane linkage and a biuret linkage, it may be linked to a structure which forms a linkage to an aromatic compound linked to two or more nitrogen atoms, or to a structure derived from an active hydrogen compound (b2) to be described below.

Illustrated examples of the structure (1) include a structure in which the nitrogen atom in the urea linkage links through 6 methylene chains to a nitrogen atom different from the nitrogen atom, the different nitrogen atom being linked to a different molecular chain through a urea linkage or a urethane linkage or a biuret linkage; a structure in which the nitrogen atom in the urea linkage links through 6 methylene chains to a nitrogen atom different from the nitrogen atom, one secondary or tertiary carbon and two methyl groups being contained between the two nitrogen atoms; and a structure in which the nitrogen atom in the urea linkage links through a cyclohexyl ring to a nitrogen atom different from the nitrogen atom, the urethane linkage and the different nitrogen atom being linked directly or through a methylene chain to the cyclohexyl ring.

Illustrated examples of the structure in which an aromatic compound is linked to two or more nitrogen atoms include a structure in which the nitrogen atoms are linked to two or more of any of the ortho-position, the meta-position, and the para-position in a benzene ring; and a structure in which two or more benzene rings are linked through a methylene chain, nitrogen atoms being linked to any of the ortho-position, the meta-position, and the para-position in the respective benzene rings relative to the methylene chain.

The latent hardener according to the present invention is characterized in that the hardener (A) for epoxy resins is covered with a film (c1) obtained by reacting an isocyanate compound (b1) with an active hydrogen compound (b2).

As the film (c1) covering the hardener for epoxy resins, preferred are those having the groups (x) capable of absorbing infrared rays of 1630 cm⁻¹ to 1680 cm⁻¹ in wave length and the groups (y) capable of absorbing infrared rays of 1680 cm⁻¹ to 1725 cm⁻¹ in wave length in terms of the balance between storage stability and reactivity.
The groups (x) and the groups (y) can be determined by using a Fourier transformation type of infrared spectrophotometer (referred to as FT-IR). Among the groups (x), a urea linkage, for example, is particularly useful. Among the groups (y), a biuret linkage, for example, is particularly useful. In addition, the resulting film preferably has a group (z) capable of absorbing infrared rays of 1730 cm⁻¹1755 cm⁻¹ in wave length. A urethane linkage is particularly preferred as the group (z).

Examples of the hardener (A) for epoxy resins used in the present invention include compounds such as amine type hardeners; acid anhydride type hardeners such as phthalic anhydride, hexahydrophthalic anhydride, tetrahydrophthalic anhydride, and methylnadic anhydride; phenol type hardeners such as phenol novolak, cresol novolak, and bisphenol A novolak; mercaptan type hardeners such as propylene glycol-modified polymercaptans, trimethylolpropane thioglycolate, and polysulfide resins; halogenated boron salt type such as an ethylamine salt of trifluoroborane; quaternary ammonium salt type hardeners such as a phenol salt of 1,8-diazabicyclo(5,4,0)-undecene-7; urea type hardeners such as 3-phenyl-1,1-dimethylurea; and phosphine type hardeners such as triphenylphosphine, tetraphenylphosphonium, and tetraphenylborate. Of them, amine type hardeners are preferred since they are excellent in low-temperature curability and storage stability.

The hardener (A) for epoxy resins used in the present invention is characterized by comprising an amine type hardener comprising an amine adduct (a) and a low molecular amine compound (e) as main components.

There will now be described an amine adduct (a).
The amine adduct (a) is a compound having an amino group obtained by reacting at least one compound selected from the group consisting of carboxylic acid compounds, sulfonic acid compounds, isocyanate compounds, urea compounds and epoxy resins (a1) with an amine compound (a2). The carboxylic acid compounds, sulfonic acid compounds, isocyanate compounds, urea compounds and epoxy resins (a1) used as a raw material of the amine adduct (a) will be described below.
Examples of the carboxylic acid compounds include succinic acid, adipic acid, sebacic acid, phthalic acid, and dimer acid.
Examples of the sulfonic acid compounds include ethanesulfonic acid, and p-toluenesulfonic acid.
Examples of the isocyanate compounds include aliphatic diisocyanate, alicyclic diisocyanate, aromatic diisocyanate, aliphatic triisocyanate, and polyisocyanate. Examples of the aliphatic diisocyanate include ethylenediisocyanate, propylenediisocyanate, butylenediisocyanate, hexamethylenediisocyanate, and trimethylhexamethylenediisocyanate. Examples of the alicyclic diisocyanate include isophoronediisocyanate, 4-4'-dicyclohexylmethanediisocyanate, norbornanediisocyanate, 1,4-isocyanatocyclohexane, 1,3-bis(isocyanatomethyl)-cyclohexane, and 1,3-bis(2-isocyanatopropyl-2yl)-cyclohexane. Examples of the aromatic diisocyanate include tolylenediisocyanate, 4,4'-diphenylmethanediisocyanate, xylenediisocyanate, and 1,5-naphthalenediisocyanate. Examples of the aliphatic triisocyanate include 1,3,6-triisocyanate methylhexane, and 2,6-diisocyanato hexanoic acid-2-isocyanatoethyl. Examples of the polyisocyanate include polymethylene polyphenyl polyisocyanate and a polyisocyanate derived from the aforementioned diisocyanate compounds.
As the polyisocyanate derived from the aforementioned diisocyanate compounds, mention may be made of isocyanulate type polyisocyanate, buret type polyisocyanate, urethane type polyisocyanate, allophanate type polyisocyanate, and carbodiimide type polyisocyanate.
Examples of the urea compound include urea, methylurea, dimethylurea, ethylurea, and t-butylurea.

As the epoxy resin (a1), either a monoepoxy compound or a polyvalent epoxy compound, or a mixture thereof may be used. Examples of the monoepoxy compound include butyl glycidyl ether, hexyl glycidyl ether, phenyl glycidyl ether, allyl glycidyl ether, p-tert-butylphenyl glycidyl ether, ethylene oxide, propylene oxide, p-xylyl glycidyl ether, glycidyl acetate, glycidyl butyrate, glycidyl hexoate, and glycidyl benzoate. Examples of the polyvalent epoxy compound include glycidyl type epoxy resins such as bisphenol type epoxy resins obtained by glycidylating bisphenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromo bisphenol A, tetrachloro bisphenol A, and tetrafluoro bisphenol A; epoxy resins obtained by glycidylating other divalent phenols such as biphenol, dihydroxynaphthalene, and 9,9-bis(4-hydroxyphenyl)fluorene; epoxy resins obtained by glycidylating trisphenols such as 1,1,1-tris(4-hydroxyphenyl)methane, and 4,4-(1-(4-(1-(4-hydroxyphenyl)-1-methylethyl)phenyl)ethylidene)bisphenol; epoxy resins obtained by glycidylating tetrakis phenols such as 1,1,2,2-tetrakis(4-hydroxyphenyl)ethane; novolak type epoxy resins obtained by glycidylating novolaks such as phenol novolak, cresol novolak, bisphenol A novolak, brominated phenol novolak, and brominated bisphenol A novolak; epoxy resins obtained by glycidylating polyhydric phenols; aliphatic ether type epoxy resins obtained by glycidylating polyhydric alcohols such as glycerin and polyethylene glycol; ether ester type epoxy resins obtained by glycidylating hydroxycarboxylic acids such as p-oxybenzoic acid and β-oxynaphthoic acid; ester type epoxy resins obtained by glycidylating polycarboxylic acids such as phthalic acid and terephthalic acid; amine type epoxy resins such as glycidylated compounds of amine compounds such as 4,4-diaminodiphenyl methane and m-amino phenol and triglycidyl isocyanulate, and alicyclic epoxides such as 3,4-epoxycyclohexylmethyl-3',4'-epoxycyclohexane carboxylate.

Among carboxylic acid compounds, sulfonic acid compounds, isocyanate compounds, urea compounds and epoxy resins (a1) used as a raw material for the amine adduct (a), the epoxy resins (a1) are preferred because they have high curability and excellent storage stability.
As the epoxy resin (a1), polyvalent epoxy compounds are preferably used since they can enhance the storage stability of epoxy resin compositions. As the polyvalent epoxy compound, a glycidyl type epoxy resin is preferably used since it has overwhelmingly high productivity of the amine adduct (a). More preferably, an epoxy resin obtained by glycidylating a polyhydric phenol is used since the cured product thereof has excellent adhesiveness and heat resistance, and still more preferably, a bisphenol type epoxy resin is used. An epoxy resin obtained by glycidylating bisphenol A and an epoxy resin obtained by glycidylating bisphenol F are further preferred. The epoxy resin obtained by glycidylating bisphenol A is furthermore preferred. These epoxy resins may be used singly or in combination.

The epoxy resin (a1) preferably has a total chlorine content of 2,500 ppm or less, more preferably 2,000 ppm or less, more preferably 1,500 ppm or less, more preferably 800 ppm or less, more preferably 400 ppm or less, more preferably 180 ppm or less, more preferably 100 ppm or less, more preferably 80 ppm or less, still more preferably 50 ppm or less, in order to obtain an epoxy resin composition having a good balance between curability and storage stability.

The total chlorine content in the present invention refers to the total amount of organic and inorganic chlorine contained in compounds, the value being relative to the mass of the compounds. The total chlorine content is determined by the following procedure. An epoxy resin composition is repeatedly washed and filtered with xylene until the epoxy resin disappears. Next, the filtrate is evaporated under reduced pressure at 100°C or less to obtain an epoxy resin. The resulting epoxy resin sample in an amount of 1 to 10 g is accurately weighed so that the titre is from 3 to 7 ml, and dissolved in 25 ml of ethylene glycol monobutyl ether. To the solution, is added 25 ml of 1 N KOH solution in propylene glycol, followed by boiling the mixture for 20 minutes. The total chlorine content is then obtained by calculation from the titre obtained by titrating the resulting solution with aqueous silver nitrate solution.

A hardener having high curing reactivity can be obtained by using the epoxy resin (a1) having a total chlorine content of 2,500 ppm or less.

Moreover, in order to easily control the shell-forming reaction, the total chlorine content is preferably 0.01 ppm or more, more preferably 0.02 ppm or more, more preferably 0.05 ppm or more, more preferably 0.1 ppm or more, more preferably 0.2 ppm or more, still more preferably 0.5 ppm or more. When the total chlorine content is 0.1 ppm or more, the shell-forming reaction can be efficiently performed on the surface of the hardener, providing a shell excellent in storage stability. The hardener has, for example, a total chlorine content in the range of preferably 0.1 ppm or more and 200 ppm or less, more preferably 0.2 ppm or more and 80 ppm or less, more preferably 0.5 ppm or more and 50 ppm or less.

Of the total chlorine, a chlorine contained in a 1,2-chlorohydrine group is generally referred to as a hydrolyzable chlorine. The content of the hydrolyzable chlorine in the epoxy resin used as a raw material for the amine adduct is preferably 50 ppm or less, more preferably from 0.01 to 20 ppm, still more preferably from 0.05 to 10 ppm. The hydrolyzable chlorine content is determined by the following procedure. To 50 ml of toluene is dissolved 3 g of a sample. To the solution, is added 20 ml of 0.1 N KOH solution in methanol, followed by boiling the mixture for 15 minutes. The hydrolyzable chlorine content is obtained by calculation from the titre obtained by titrating the resulting solution with aqueous silver nitrate solution. Preferably, a hydrolyzable chlorine content of 50 ppm or less is advantageous to the compatibility of high curability and storage stability and exhibits excellent electrical characteristics.

The amine compound (a2) includes a compound having at least one primary and/or secondary amino group and no tertiary amino group and a compound having at least one tertiary amino group and at least one active hydrogen group.

Examples of the compound having at least one primary and/or secondary amino group and no tertiary amino group include primary amines having no tertiary amino group such as methylamine, ethylamine, propylamine, butylamine, ethylenediamine, propylenediamine, hexamethylenediamine, diethylenetriamine, triethylenetetramine, ethanolamine, propanolamine, cyclohexylamine, isohoronediamine, aniline, toluidine, diaminodiphenylmethane, and diaminodiphenyl sulfone; and secondary amines having no tertiary amino group such as dimethylamine, diethylamine, dipropylamine, dibutylamine, dipentylamine, dihexylamine, dimethanolamine, diethanolamine, dipropanolamine, dicyclohexylamine, piperidine, piperidone, diphenylamine, phenylmethylamine, and phenylethylamine.

In the compound having at least one tertiary amino group and at least one active hydrogen group, as the active hydrogen group, mention may be made of a primary amino group, secondary amino group, hydroxyl group, thiol group, carboxylic acid, and hydrazide group.

Examples of the compound having at least one active hydrogen group and at least one tertiary amino group include aminoalcohols such as 2-dimethylaminoethanol, 1-methyl-2-dimethylaminoethanol, 1-phenoxymethyl-2-dimethylaminoethanol, 2-diethylaminoethanol, 1-butoxymethyl-2-dimethylaminoethanol, methyldiethanolamine, triethanolamine, and N-β-hydroxyethylmorpholine; aminophenols such as 2-(dimethylaminomethyl)phenol and 2,4,6-tris(dimethylaminomethyl)phenol; imidazoles such as 2-methylimidazole, 2-ethyl-4-methylimidazole, 2-undecylimidazole, 2-heptadecylimidazole, 2-phenylimidazole, 1-aminoethyl-2-methylimidazole, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, and 1-(2-hydroxy-3-butoxypropyl)-2-ethyl-4-methylimidazole; imidazolines such as 1-(2-hydroxy-3-phenoxypropyl)-2-phenylimidazoline, 1-(2-hydroxy-3-butoxypropyl)-2-methylimidazoline, 2-methylimidazoline, 2,4-dimethylimidazoline, 2-ethylimidazoline, 2-ethyl-4-methylimidazoline, 2-benzylimidazoline, 2-phenylimidazoline, 2-(o-tolyl)-imidazoline, tetramethylene-bis-imidazoline, 1,1,3-trimethyl-1,4-tetramethylene-bis-imidazoline, 1,3,3-trimethyl-1,4-tetramethylene-bis-imidazoline, 1,1,3-trimethyl-1,4-tetramethylene-bis-4-methylimidazoline, 1,3,3-trimethyl-1,4-tetramethylene-bis-4-methylimidazoline, 1,2-phenylene-bis-imidazoline, 1,3-phenylene-bis-imidazoline, 1,4-phenylene-bis-imidazoline, and 1,4-phenylene-bis-4-methylimidazoline; tertiary aminoamines such as dimethylaminopropylamine, diethylaminopropylamine, dipropylaminopropylamine, dibutylaminopropylamine, dimethylaminoethylamine, diethylaminoethylamine, dipropylaminoethylamine, dibutylaminoethylamine, N-methylpiperazine, N-aminoethylpiperazine, and diethylaminoethylpiperazine; aminomercaptans such as 2-dimethylaminoethanethiol, 2-mercaptobenzoimidazole, 2-mercaptobenzothiazole, 2-mercaptopyridine, and 4-mercaptopyridine; aminocarboxylic acids such as N,N-dimethylaminobenzoic acid, N,N-dimethyl glycine, nicotinic acid, isonicotinic acid, and picolinic acid; and amino hydrazides such as N,N-dimethylglycine hydrazide, nicotinic acid hydrazide, and isonicotinic acid hydrazide.

As the amine compound (a2), a compound having at least one tertiary amino group and at least one active hydrogen group is preferably used since it has an excellent balance between storage stability and curability. Imidazoles are more preferred, and 2-methylimidazole and 2-ethyl-4-methylimidazole are particularly preferred.

The amine adduct (a) used in the present invention is obtained, for example, by reacting the epoxy resin (a1) with the amine compound (a2), optionally in the presence of a solvent, at a temperature, for example, from 50 to 250°C for 0.1 to 10 hours, wherein the active hydrogen group in the amine compound (b1) is preferably in the range from 0.5 to 10 equivalents (more preferably from 0.8 to 5 equivalents, furthermore preferably from 0.95 to 4 equivalents) relative to 1 equivalent of the epoxy group in the epoxy resin (a1).

A ratio in equivalent of the active hydrogen group to the epoxy group of 0.5 or more is advantageous to obtain an amine adduct (a) having a molecular weight distribution of 7 or less. The equivalent ratio of 10 or less is advantageous in that the recovery of the unreacted amine compound (a2) can be performed economically, which is performed for bringing the content of the low molecular amine compound (e) in the hardener for epoxy resins of the present invention into a desired value.

Examples of the solvent to be used as needed in the reaction of the epoxy resin (a1) with the amine compound (a2) to obtain the amine adduct (a) include hydrocarbons such as benzene, toluene, xylene, cyclohexane, mineral sprit, and naphtha; ketones such as acetone, methyl ethyl ketone, and methyl isobutyl ketone; esters such as ethyl acetate, n-butyl acetate, and propylene glycol monomethyl ether acetate; alcohols such as methanol, isopropanol, n-butanol, butyl cellosolve, and butyl carbitol; and water. These solvent may be used in combination.

Examples of the low molecular amine compound (e) contained in the hardener (A) for epoxy resins used in the present invention include a compound having a primary, secondary, and/or tertiary amino group. They can be used in combination.

Examples of the compound having a primary amino group include methylamine, ethylamine, propylamine, butylamine, ethylenediamine, propylenediamine, hexamethylenediamine, diethylenetriamine, triethylenetetramine, ethanolamine, propanolamine, cyclohexylamine, isohoronediamine, aniline, toluidine, diaminodiphenylmethane, and diaminodiphenyl sulfone.

Examples of the compound having a secondary amino group include dimethylamine, diethylamine, dipropylamine, dibutylamine, dipentylamine, dihexylamine, dimethanolamine, diethanolamine, dipropanolamine, dicyclohexylamine, piperidine, piperidone, diphenylamine, phenylmethylamine, and phenylethylamine.

Examples of the compound having a tertiary amino group include tertiary amines such as trimethylamine, triethylamine, benzyldimethylamine, N,N'-dimethylpiperazine, triethylenediamine, 1,8-diazabicyclo(5,4,0)-undecene-7, and 1,5-diazabicyclo(4,3,0)-nonene-5; aminoalcohols such as 2-dimethylaminoethanol, 1-methyl-2-dimethylaminoethanol, 1-phenoxymethyl-2-dimethylaminoethanol, 2-diethylaminoethanol, 1-butoxymethyl-2-dimethylaminoethanol, methyldiethanolamine, triethanolamine, and N-β-hydroxyethylmorpholine; aminophenols such as 2-(dimethylaminomethyl)phenol and 2,4,6-tris(dimethylaminomethyl)phenol; imidazoles such as 2-methylimidazole, 2-ethyl-4-methylimidazole, 2-undecylimidazole, 2-heptadecylimidazole, 2-phenylimidazole, 1-aminoethyl-2-methylimidazole, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, and 1-(2-hydroxy-3-butoxypropyl)-2-ethyl-4-methylimidazole; imidazolines such as 1-(2-hydroxy-3-phenoxypropyl)-2-phenylimidazoline, 1-(2-hydroxy-3-butoxypropyl)-2-methylimidazoline, 2-methylimidazoline, 2,4-dimethylimidazoline, 2-ethylimidazoline, 2-ethyl-4-methylimidazoline, 2-benzylimidazoline, 2-phenylimidazoline, 2-(o-tolyl)-imidazoline, tetramethylene-bis-imidazoline, 1,1,3-trimethyl-1,4-tetramethylene-bis-imidazoline, 1,3,3-trimethyl-1,4-tetramethylene-bis-imidazoline, 1,1,3-trimethyl-1,4-tetramethylene-bis-4-methylimidazoline, 1,3,3-trimethyl-1,4-tetramethylene-bis-4-methylimidazoline, 1,2-phenylene-bis-imidazoline, 1,3-phenylene-bis-imidazoline, 1,4-phenylene-bis-imidazoline, and 1,4-phenylene-bis-4-methylimidazoline; tertiary aminoamines such as dimethylaminopropylamine, diethylaminopropylamine, dipropylaminopropylamine, dibutylaminopropylamine, dimethylaminoethylamine, diethylaminoethylamine, dipropylaminoethylamine, dibutylaminoethylamine, N-methylpiperazine, N-aminoethylpiperazine, and diethylaminoethylpiperazine; aminomercaptans such as 2-dimethylaminoethanethiol, 2-mercaptobenzoimidazole, 2-mercaptobenzothiazole, 2-mercaptopyridine, and 4-mercaptopyridine; aminocarboxylic acids such as N,N-dimethylaminobenzoic acid, N,N-dimethyl glycine, nicotinic acid, isonicotinic acid, and picolinic acid; and amino hydrazides such as N,N-dimethylglycine hydrazide, nicotinic acid hydrazide, and isonicotinic acid hydrazide.

As the low molecular amine compound (e), a compound having a tertiary amino group is preferably used since it provides an epoxy resin composition excellent in storage stability. Imidazoles are more preferred, and 2-methylimidazole and 2-ethyl-4-methylimidazole are particularly preferred.

By bringing the content of the low molecular amine compound (e) to 0.001 parts by mass or more, it is possible to form a dense shell in the shell-forming reaction and obtain a microcapsule type hardener (D) for epoxy resins having high storage stability.
When the content of the low molecular amine compound (e) is higher than 10 parts by mass, latency and solvent resistance will be impaired. In addition, by the reaction of the low molecular amine compound (e) eluted with the epoxy resin (E), agglomerates are liable to be formed, resulting in impairment of dispersibility.

The low molecular amine compound (e) may be mixed with the amine adduct (a) after the production of the amine adduct (a) or before and/or during the production of the amine adduct (a). Further, the unreacted amine compound (a2) which is a raw material for the amine adduct (a) may be used as the low molecular amine compound (e).

As the form of the hardener (A) for epoxy resins, mention may be made of liquid, massive, granular, and powdered forms, and the like. Granular or powdered form is preferably used, and powdered form is more preferably used. The powdered form used herein is not particularly limited; however, the average particle size of the powder is preferably from 0.1 to 50 µm, more preferably from 0.5 to 10 µm. A homogenous cured product can be obtained by using a powder having an average particle size of 50 µm or less. The particle size as described in the present invention refers to a Stokes' diameter measured by the light-scattering photometry. The average particle size used herein refers to as a median diameter. The shape of the particles is not particularly limited, and either spherical or indefinite shape may be used. To reduce the viscosity of a master batch or a one-pot type epoxy resin composition, a spherical shape is preferred. The term "spherical" used herein includes not only the perfect spherical shape but also an indefinite shape with rounded corners.

The hardener (A) for epoxy resins of the present invention preferably has a total chlorine content of 2,500 ppm or less, more preferably 2,000 ppm or less, more preferably 1,500 ppm or less, more preferably 800 ppm or less, more preferably 400 ppm or less, more preferably 180 ppm or less, more preferably 100 ppm or less, more preferably 80 ppm or less, still more preferably 50 ppm or less. It is possible to obtain an epoxy resin composition having a high balance between curability and storage stability when the total chlorine content is 2,500 ppm or less.
Moreover, in order to easily control the shell-forming reaction, the total chlorine content of the hardener (A) for epoxy resins is preferably 0.01 ppm or more, more preferably 0.02 ppm or more, more preferably 0.05 ppm or more, more preferably 0.1 ppm or more, more preferably 0.2 ppm or more; still more preferably 0.5 ppm or more. When the total chlorine content is 0.1 ppm or more, the shell-forming reaction can be efficiently performed on the surface of the hardener, providing a shell excellent in storage stability.

Next, the isocyanate component (b1) will be described.
The isocyanate component (b1) to be used in the present invention is a compound having an isocyanate group which contains a low molecular bifunctional aliphatic isocyanate compound (b1-1) in an amount of 1% by mass or more and 95% by mass or less. The low molecular bifunctional aliphatic isocyanate compound refers to a linear or cyclic aliphatic compound having two isocyanate groups, which contains 90% or more of a compound having a number average molecular weight of 1,000 or less as determined by GPC measurement according to the procedure described in Examples.

Such an isocyanate compound is illustrated below. Examples of the linear low molecular bifunctional aliphatic isocyanate compound include ethylenediisocyanate, propylenediisocyanate, butylenediisocyanate, hexamethylenediisocyanate, 1,8-diisocyanateoctane, 2,2,4-trimethylhexamethylenediisocyanate, and 1,12-diisocyanatedodecane. Examples of the alicyclic low molecular bifunctional aliphatic isocyanate compound include isophoronediisocyanate, 4-4'-dicyclohexylmethanediisocyanate, norbornanediisocyanate, 1,4-diisocyanatocyclohexane, 1,3-bis(isocyanatomethyl)-cyclohexane, and 1,3-bis(2-isocyanatopropyl-2yl)-cyclohexane. A urethane type low molecular bifunctional aliphatic isocyanate may also be used. A urethane type low molecular bifunctional aliphatic isocyanate having a number average molecular weight of 1,000 or less can be obtained by reacting a low molecular aliphatic diisocyanate monomer with a polyol. Examples of polyols as used herein include ethylene glycol, propylene glycol, 1,3-butanediol, 1,4-butanediol, diethylene glycol, polyethylene glycol, polypropylene glycol, polytetramethylene glycol, and trimethylolpropane. These polyols may be used in combination. Among these examples, hexamethylenediisocyanate and 1,8-diisocyanateoctane are preferred in terms of a balance of curability, storage stability and pot life. Hexamethylenediisocyanate is more preferred.

The amount of the low molecular bifunctional aliphatic isocyanate compound (b1-1) in the isocyanate compound (b1) is 1% by mass or more and 95% by mass or less since this range provides both excellent storage stability and curability.
When the amount is less than 1% by mass or more than 95% by mass, storage stability and solvent resistance will be reduced. From such a viewpoint, the amount of the low molecular bifunctional aliphatic isocyanate compound (b1-1) in the isocyanate compound (b1) is 7% by mass or more and less than 90% by mass, preferably 7% by mass or more and less than 70% by mass, more preferably 10% by mass or more and less than 50% by mass.

Further, as the isocyanate compound other than the low molecular bifunctional aliphatic isocyanate compound (b1-1) in the isocyanate compound (b1), mention may be made of an aromatic isocyanate (i), an aliphatic triisocyanate (ii), an adduct type aliphatic polyisocyanate (iii). The aromatic isocyanate compound (b1-2) is preferred in terms of the balance of curability, pot life, and solvent resistance.

As the aromatic isocyanate compound (b1-2), an aromatic diisocyanate, an aromatic triisocyanate, an aromatic polyisocyanate and the like may be used. Examples of the aromatic diisocyanate include tolylenediisocyanate, 4,4'-diphenylmethanediisocyanate, xylylenediisocyanate, and 1,5-naphthalenediisocyanate; examples of the aromatic triisocyanate include triphenylmethanetriisocyanate, and tris(isocyanatephenyl)thiophosphate; and examples of the aromatic polyisocyanate include isocyanurate type polyisocyanates, buret type polyisocyanates, and carbodiimide type polyisocyanates derived from polymeric isocyanates such as polymethylene polyphenyl polyisocyanates and/or aromatic diisocyanates and/or aromatic triisocyanates.
Among others, tolylenediisocyanate, polymethylene polyphenyl polyisocyanates, or carbodiimide type polyisocyanates derived from polymethylene polyphenyl polyisocyanates are preferred in that they have high dispersibility in epoxy resins and can provide epoxy resin compositions excellent in a balance of pot life, solvent resistance, humidity resistance, and dispersibility.

With regard to other isocyanates, examples of the aliphatic triisocyanate (ii) include 1,3,6-triisocyanatemethylhexane, and 2,6-diisocyanato hexanoic acid-2-isocyanatoethyl.

The adduct type aliphatic polyisocyanate (iii) is an adduct type polyisocyanate derived from aliphatic isocyanate monomers such as aliphatic diisocyanates, alicyclic diisocyanates, aromatic diisocyanates, aliphatic triisocyanates, and alicyclic triisocyanates. Examples of the adduct type aliphatic polyisocyanate (iii) include isocyanurate type polyisocyanates and biuret type polyisocyanates.
Examples of the aliphatic diisocyanate as a raw material to derive the adduct type aliphatic polyisocyanate include ethylenediisocyanate, propylenediisocyanate, butylenediisocyanate, hexamethylenediisocyanate, 1,8-diisocyanateoctane, 2,2,4-trimethylhexamethylenediisocyanate, and 1,12-diisocyanatedodecane. Examples of the alicyclic diisocyanate include isophoronediisocyanate, 4-4'-dicyclohexylmethanediisocyanate, norbornanediisocyanate, 1,4-diisocyanatocyclohexane, 1,3-bis(isocyanatomethyl)-cyclohexane, and 1,3-bis(2-isocyanatopropyl-2yl)-cyclohexane. Examples of the aliphatic triisocyanate include 1,6,11-undecanetriisocyanate, 1,8-diisocyanate-4-isocyanatemethyloctane, 1,3,6-hexamethylene triisocyanate, and 2,6-diisocyanato hexanoic acid-2-isocyanatoethyl, and 2,6-diisocyanato hexanoic acid-1-methyl-2-isocyanatoethyl. Examples of the alicyclic triisocyanate include tricyclohexylmethane triisocyanate and bicycloheptane triisocyanate. Examples of the aromatic diisocyanate include tetramethylxylylenediisocyanate and xylylenediisocyanate.
When the adduct type aliphatic polyisocyanate is derived, aliphatic diisocyanates and aliphatic triisocyanates are preferred because they provide high reactivity. More preferred are aliphatic diisocyanates, and furthermore preferred is hexamethylenediisocyanate.

The isocyanurate type polyisocyanate is obtained by cyclic trimerization of an aliphatic isocyanate monomer using a quaternary ammonium salt or the like, and the biuret type polyisocyanate is obtained by reacting an aliphatic isocyanate monomer with a biuret-forming agent such as water.

As the adduct type aliphatic polyisocyanate, the buret type polyisocyanate and isocyanurate type polyisocyanate are preferred since they provide a latent hardener having high stability; the biuret type polyisocyanate is more preferred.

The use of two or more types of isocyanates in combination is usually avoided, because when different types of isocyanate compounds are used, a film obtained from the reaction may be heterogeneous due to the different reactivity of the respective isocyanate compounds, resulting in difficulty in obtaining a latent hardener having stable quality and reduction in pot life or solvent resistance. Further, since the low molecular aliphatic isocyanate compound is generally considered to have lower reactivity than the aromatic isocyanate compound, the use of these compounds in combination has been considered to be inappropriate.

As a result of intensive studies to develop a hardener which overcomes the above noted problems, the inventors have found, contrary to the above anticipation, that the use of a low molecular bifunctional aliphatic isocyanate compound (b1-1) in combination with an aromatic isocyanate compound (b1-2) within a specific range can provides a latent hardener having characteristics excellent in a balance of curability, pot life, and solvent resistance. Furthermore, aliphatic isocyanate compounds generally have lower reactivity than aromatic isocyanate compounds. Therefore, it is common to those skilled in the art that when they are served for the reaction in combination, the aliphatic isocyanate compound is used as an adduct type aliphatic polyisocyanate which is polyfunctionalized by preliminary reaction. However, the inventors have found that the use of the low molecular aliphatic isocyanate compound (b1-1) as a monomer in combination with the aromatic isocyanate compound unexpectedly provides a latent hardener superior in pot life and solvent resistance.

The isocyanate compound (b1) may be subjected to reaction in a lump or in portions, and when the low molecular bifunctional aliphatic isocyanate compound (b1-1) is subjected to reaction simultaneously with a different isocyanate compound, the effects which the present invention intends to provide may be produced more fully.

As the active hydrogen compound (b2) used in the present invention, mention may be made of water, a compound having one or more primary and/or secondary amino groups in the molecule, and a compound having one or more hydroxyl groups in the molecule. Water and a compound having one or more hydroxyl groups in the molecule are preferred. These can be used in combination.

Aliphatic amines, alicyclic amines, and aromatic amines can be used as the compound having one or more primary and/or secondary amino groups in the molecule used as the active hydrogen compound (b2). Examples of the aliphatic amine include alkyl amines such as methylamine, ethylamine, propylamine, butylamine, and dibutylamine; alkylenediamines such as ethylenediamine, propylenediamine, butylenediamine, and hexamethylenediamine; polyalkylenepolyamines such as diethylenetriamine, triethylenetetramine, and tetraethylenepentamine; and polyoxyalkylene polyamines such as polyoxypropylenediamine and polyoxyethylenediamine. Examples of the alicyclic amine include cyclopropylamine, cyclobutylamine, cyclopentylamine, cyclohexylamine, and isophoronediamine. Examples of the aromatic amine include aniline, toluidine, benzylamine, naphthylamine, diaminodiphenylmethane, and diaminodiphenylsulfone.

As the compound having one or more hydroxyl groups in the molecule used as the active hydrogen compound (b2), mention may be made of alcohol compounds and phenol compounds. Examples of the alcohol compounds include mono alcohols such as methyl alcohol, propyl alcohol, butyl alcohol, amyl alcohol, hexyl alcohol, heptyl alcohol, octyl alcohol, nonyl alcohol, decyl alcohol, undecyl alcohol, lauryl alcohol, dodecyl alcohol, stearyl alcohol, eicosyl alcohol, allyl alcohol, crotyl alcohol, propargyl alcohol, cyclopentanol, cyclohexanol, benzyl alcohol, cinnamyl alcohol, ethylene glycol monomethyl ether, ethylene glycol monoethyl ether, ethylene glycol monoethyl ether, and diethylene glycol monobutyl; and polyhydric alcohols such as ethylene glycol, polyethylene glycol, propylene glycol, polypropylene glycol, 1,3-butanediol, 1,4-butanediol, hydrogenated bisphenol A, neopentylglycol, glycerin, trimethylolpropane, and pentaerythritol. '
Also, a compound having two or more secondary hydroxyl groups in the molecule, which is obtained by the reaction between a compound having one or more epoxy groups in the molecule and a compound having one or more hydroxyl groups, carboxyl groups, primary or secondary amino groups, or mercapto groups in the molecule, is included as an example of the polyhydric alcohols. In these alcohol compounds, any one of primary, secondary or tertiary alcohols may be used. Examples of the phenol compound include monophenols such as phenol, cresol, xylenol, carvacrol, thymol, and naphthol; and polyhydric phenols such as catechol, resorcin, hydroquinone, bisphenol A, bisphenol F, pyrogallol, and phloroglucine. As the compound having one or more hydroxyl groups in the molecule, use is preferably made of polyhydric alcohols and polyhydric phenols. Of them, polyhydric alcohols are more preferred.

The reaction between the isocyanate component (b1) and the active hydrogen compound (b2) is generally performed in a temperature range from -10°C to 150°C. If the reaction temperature is 150°C or higher, a film obtained by the reaction between the isocyanate component (b1) and the active hydrogen compound (b2) cannot sufficiently exhibit storage stability thereof since the film is heterogeneous. The storage stability may not be exhibited also in the case when the reaction temperature is lower than -10°C since the reaction will not be completed. From such a point of view, the reaction temperature is preferably from 0°C to 120°C, more preferably from 10°C to 100°C.

A typical reaction time is from 10 minutes to 12 hours. The storage stability may not be exhibited if the reaction time is less than 10 minutes since the reaction will not be completed. A reaction time of 12 hours or more is not industrially desirable due to a low productivity.

If necessary, the reaction may be performed in a dispersion medium. Examples of the dispersion medium include a solvent, plasticizer, and resin. Examples of the solvent include hydrocarbons such as benzene, toluene, xylene, cyclohexane, mineral spirit, and naphtha; ketones such as acetone, methyl ethyl ketone, and methyl isobutyl ketone; esters such as ethyl acetate, n-butyl acetate, and propylene glycol monomethyl ethyl ether acetate; alcohols such as methanol, isopropanol, n-butanol, butyl cellosolve, and butyl carbitol; and water. Examples of the plasticizer include diesters of phthalic acid such as dibutyl phthalate, di(2-ethylhexyl)phthalate; aliphatic dibasic acid esters such as di(2-ethylhexyl)adipate; phosphate triesters such as tricresyl phosphate; and glycol esters such as polyethylene glycol ester. Examples of the resin include silicone resins, epoxy resins and phenol resins.
The isocyanate component (b1) and the active hydrogen compound (b2) are usually used in such a manner that the ratio of the isocyanate group of the isocyanate component (b1) to the active hydrogen of the active hydrogen compound (b2) falls within the range of 1:0.1 to 1:1,000 in terms of an equivalent amount.

Examples of the method for covering the hardener (A) for epoxy resins with a reaction product between the isocyanate component (b1) and the active hydrogen compound (b2) include a method in which the resulting reaction product is dissolved in a liquid in which the hardener (A) for epoxy resins is dispersed and the solubility of the reaction product is reduced, thereby precipitating the reaction product on the surface of the hardener (A) for epoxy resins; and a method in which the isocyanate component (b1) is allowed to react with the active hydrogen compound (b2) in the state where the hardener (A) for epoxy resins is dispersed in a dispersion medium, thereby precipitating the reaction product on the surface of the hardener (A) for epoxy resins, or they are allowed to react on the surface of the hardener (A) for epoxy resins, which is used as a reaction field, thereby forming the reaction product on the surface thereof. The latter method is preferred since the reaction and covering can be performed simultaneously.

The resulting film (c1) is characterized by having a group (x) capable of absorbing infrared rays of 1630 cm⁻¹ to 1680 cm⁻¹ in wave length and a group (y) capable of absorbing infrared rays of 1680 cm⁻¹ to 1725 cm⁻¹ in wave length. As the group (x), a urea linkage is particularly preferred. As the group (y), a biuret linkage is preferred. In addition, the resulting film preferably has a group (z) capable of absorbing infrared rays of 1730 cm⁻¹ to 1755 cm⁻¹ in wave length. A urethane linkage is particularly preferred as the group (z).

The urea linkage and biuret linkage are formed by the reaction of an isocyanate compound with water and/or with an amine compound having at least one primary and/or secondary amino group in the molecule. The urethane linkage can be formed by the reaction of an isocyanate compound with a compound having at least one hydroxyl group in the molecule.
The latent hardener for epoxy resin according to the present invention is preferably formed into a microcapsule type hardener (D) for epoxy resins to be described below since the microcapsule type hardener can provide higher stability. The microcapsule type hardener (D) for epoxy resins according to the present invention is a hardener having a core-shell structure in which the latent hardener for epoxy resin according to the present invention as a core is covered with a reaction product of the hardener (A) for epoxy resins and the epoxy resin (C) as a shell (c2).

Examples of the epoxy resin (C) used in the present invention include bisphenol type epoxy resins obtained by glycidylating bisphenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromo bisphenol A, tetrachloro bisphenol A, and tetrafluoro bisphenol A; epoxy resins obtained by glycidylating other divalent phenols such as biphenol, dihydroxynaphthalene, and 9,9-bis(4-hydroxyphenyl)fluorene; epoxy resins obtained by glycidylating trisphenols such as 1,1,1-tris(4-hydroxyphenyl)methane, and 4,4-(1-(4-(1-(4-hydroxyphenyl)-1-methylethyl)phenyl)ethylidene)bisphenol; epoxy resins obtained by glycidylating tetrakis phenols such as 1,1,2,2-tetrakis(4-hydroxyphenyl)ethane; novolak type epoxy resins obtained by glycidylating novolaks such as phenol novolak, cresol novolak, bisphenol A novolak, brominated phenol novolak, and brominated bisphenol A novolak; aliphatic ether type epoxy resins obtained by glycidylating polyhydric alcohols such as glycerin and polyethylene glycol; ether ester type epoxy resins obtained by glycidylating hydroxycarboxylic acids such as p-oxybenzoic acid and β-oxynaphthoic acid; ester type epoxy resins obtained by glycidylating polycarboxylic acids such as phthalic acid and terephthalic acid; amine type epoxy resins such as glycidylated compounds of amine compounds such as 4,4-diaminodiphenyl methane and m-amino phenol and triglycidyl isocyanulate, and alicyclic epoxides such as 3,4-epoxycyclohexylmethyl-3',4'-epoxycyclohexane carboxylate.
These epoxy resins may be used alone or in combination.

As the epoxy resin (C), an epoxy resin obtained by glycidylating a polyhydric phenol is preferably used since the obtained cured product thereof has excellent adhesiveness and heat resistance, and more preferably, a bisphenol type epoxy resin is used. An epoxy resin obtained by glycidylating bisphenol A and an epoxy resin obtained by glycidylating bisphenol F are further preferred. The epoxy resin obtained by glycidylating bisphenol A is furthermore preferred.

Epoxy compounds generally have impure terminals having chlorine bonded thereto in the molecules. The epoxy resin (C) preferably has a total chlorine content of 2,500 ppm or less, more preferably 2,000 ppm or less, more preferably 1,500 ppm or less, more preferably 800 ppm or less, more preferably 400 ppm or less, more preferably 180 ppm or less, more preferably 100 ppm or less, more preferably 80 ppm or less, still more preferably 50 ppm or less, since the cured product thereof has excellent electrical properties. A total chlorine content of 2,500 ppm or less can provide an epoxy resin composition highly balanced between curability and storage stability.
Moreover, in order to easily control the shell-forming reaction, the total chlorine content of the epoxy resin (C) is preferably 0.01 ppm or more, more preferably 0.02 ppm or more, more preferably 0.05 ppm or more, more preferably 0.1 ppm or more, more preferably 0.2 ppm or more, still more preferably 0.5 ppm or more. When the total chlorine content is 0.1 ppm or more, the shell-forming reaction can be efficiently performed on the surface of the hardener, providing a shell excellent in storage stability.

The reaction of the hardener (A) for epoxy resins with the epoxy resin (C) is generally performed in a temperature range from -10°C to 150°C, preferably from 0°C to 100°C for a reaction time from 1 to 168 hours, preferably from 2 hours to 72 hours. The reaction may be performed in a dispersion medium. Examples of the dispersion medium include a solvent and plasticizer.

Examples of the solvent include hydrocarbons such as benzene, toluene, xylene, cyclohexane, mineral spirit, and naphtha; ketones such as acetone, methyl ethyl ketone, and methyl isobutyl ketone; esters such as ethyl acetate, n-butyl acetate, and propylene glycol monomethyl ethyl ether acetate; alcohols such as methanol, isopropanol, n-butanol, butyl cellosolve, and butyl carbitol; and water. Examples of the plasticizer include diesters of phthalic acid such as dibutyl phthalate, di(2-ethylhexyl)phthalate; aliphatic dibasic acid esters such as di(2-ethylhexyl)adipate; phosphate triesters such as tricresyl phosphate; and glycol esters such as polyethylene glycol ester.

The ratio in amount of the hardener (A) for epoxy resins to the epoxy resin (C) when they are allowed to react with each other is not particularly limited; however, it generally falls within the range of 1:0.001 to 1:1,000, preferably 1:0.01 to 1:100 in terms of mass ratio.

Examples of the method for covering a core (hereinafter referred to as "the present core") formed of a latent hardener of the present invention with a shell (c2) (hereinafter referred to as "the present shell") formed of a reaction product between the hardener (A) for epoxy resins and the epoxy resin (C) include a method in which the present shell is dissolved in a dispersion medium in which the present core is dispersed and the solubility of the present shell is reduced, thereby precipitating the present shell on the surface of the present core; and a method in which the present core is dispersed in the epoxy resin (C) and/or in a dispersion medium in which the epoxy resin (C) is dissolved, and then the hardener (A) for epoxy resins is allowed to react with the epoxy resin (C), thereby precipitating the present shell on the surface of the present core, or they are allowed to react on the surface of the present core, which is used as a reaction field, thereby forming the present shell on the surface thereof. The latter method is preferred since the reaction and covering can be performed simultaneously.

Moreover, in the latter method; the hardener (A) for epoxy resins used in the present core may be used as a hardener (A) for epoxy resins, or another hardener (A) for epoxy resins may be separately added.

As a method for forming the film (c1), preferred is a method in which the isocyanate component (b1) is allowed to react with the active hydrogen compound (b2) on the surface of the hardener (A) for epoxy resins, which is used as a reaction field, thereby precipitating the reaction product on the surface of the hardener (A) for epoxy resins, since the shell-forming reaction in which the present shell is used for covering can be performed efficiently.

The thickness of the present shell covering the surface of the present core is preferably 5 to 1,000 nm on the average. A thickness of 5 nm or more provides storage stability, and a thickness of 1,000 nm or less provides a practical curability. The thickness of the layer used herein can be observed by a transmission electron microscope. The thickness of the shell is particularly preferably 10 to 100 nm on the average.

Moreover, as the microcapsule type hardener (D) for epoxy resins in which the present core is covered with the present shell, preferred are those having the groups (x) capable of absorbing infrared rays of 1630 cm⁻¹ to 1680 cm⁻¹ in wave length and the groups (y) capable of absorbing infrared rays of 1680 cm⁻¹ to 1725 cm⁻¹ in wave length, at least on the surface thereof, in terms of the balance between storage stability and reactivity.

The groups (x) and the groups (y) can be determined by using a Fourier transform infrared spectrophotometer (referred to as FT-IR). Further, the groups (x) and the groups (y) present at least on the surface of the hardener (C) for epoxy resins can be determined by using a FT-IR microscope.

Among the groups (x), a urea linkage, for example, is particularly useful. Among the groups (y), a biuret linkage, for example, is particularly useful.

The latent hardener for epoxy resins and/or the microcapsule type hardener (D) for epoxy resins according to the present invention is preferably used in the form of a master batch of hardener (F) for epoxy resins to be described below, since it can be easily mixed with an epoxy resin in obtaining a one-pot type epoxy resin composition.

The master batch of hardener (F) for epoxy resins of the present invention is formed by mixing 10 to 50,000 parts by mass of the epoxy resin (E) into 100 parts by mass of the latent hardener for epoxy resins and/or the microcapsule type hardener (D) for epoxy resins according to the present invention. When the epoxy resin (E) is mixed in an amount of not less than 10 parts by mass, a master batch of hardener composition for epoxy resins which is easily handled can be obtained. When the epoxy resin (E) is mixed in an amount of not more than 50,000 parts by mass, the substantial performance as a hardener is offered. From such a viewpoint, the epoxy resin (E) is preferably mixed in an amount of 100 to 5,000 parts by mass, more preferably 120 to 1,000 parts by mass, particularly preferably 150 to 400 parts by mass, into 100 parts by weight of the latent hardener for epoxy resins and/or the microcapsule type hardener (D) for epoxy resins according to the present invention.

The master batch of hardener composition (F) for epoxy resins according to the present invention preferably has a total chlorine content of 2,500 ppm or less, more preferably 1,500 ppm or less, more preferably 800 ppm or less, more preferably 400 ppm or less, more preferably 200 ppm or less, more preferably 100 ppm or less, more preferably 80 ppm or less, still more preferably 50 ppm or less, in terms of the compatibility of high curability and storage stability.

The epoxy resin (E) according to the present invention is not particularly limited as long as it does not impair the intended effects of the present invention. Examples of the epoxy resin (E) include glycidyl type epoxy resins such as bisphenol type epoxy resins obtained by glycidylating bisphenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromo bisphenol A, tetrachloro bisphenol A, and tetrafluoro bisphenol A; epoxy resins obtained by glycidylating other divalent phenols such as biphenol, and 9,9-bis(4-hydroxyphenyl)fluorene; epoxy resins obtained by glycidylating trisphenols such as 1,1,1 -tris(4-hydroxyphenyl)methane, and 4,4-(1-(4-(1-(4-hydroxyphenyl)-1-methylethyl)phenyl)ethylidene)bisphenol; epoxy resins obtained by glycidylating tetrakis phenols such as 1,1,2,2-tetrakis(4-hydroxyphenyl)ethane; novolak type epoxy resins obtained by glycidylating novolaks such as phenol novolak, cresol novolak, bisphenol A novolak, brominated phenol novolak, and brominated bisphenol A novolak; epoxy resins obtained by glycidylating polyhydric phenols; aliphatic ether type epoxy resins obtained by glycidylating polyhydric alcohols such as glycerin and polyethylene glycol; ether ester type epoxy resins obtained by glycidylating hydroxycarboxylic acids such as p-oxybenzoic acid and β-oxynaphthoic acid; ester type epoxy resins obtained by glycidylating polycarboxylic acids such as phthalic acid and terephthalic acid; amine type epoxy resins such as glycidylated compounds of amine compounds such as 4,4-diaminodiphenyl methane and m-amino phenol and triglycidyl isocyanulate, and alicyclic epoxides such as 3,4-epoxycyclohexylmethyl-3',4'-epoxycyclohexane carboxylate.
These epoxy resins may be used alone or in combination.

The epoxy resin (E) preferably has a total chlorine content of 2,500 ppm or less, more preferably 1,500 ppm or less, more preferably 800 ppm or less, more preferably 400 ppm or less, more preferably 200 ppm or less, more preferably 100 ppm or less, more preferably 80 ppm or less, still more preferably 50 ppm or less, in terms of the compatibility of high curability and storage stability.

Moreover, when the epoxy resin (E) and the epoxy resin (C) are the same, in order to easily control the shell-forming reaction, the total chlorine content of the epoxy resin (E) is preferably 0.01 ppm or more, more preferably 0.02 ppm or more, more preferably 0.05 ppm or more, more preferably 0.1 ppm or more, more preferably 0.2 ppm or more, still more preferably 0.5 ppm or more. The epoxy resin (E) has, for example, a total chlorine content in the range of preferably 0.1 ppm or more and 200 ppm or less, more preferably 0.2 ppm or more and 80 ppm or less, more preferably 0.5 ppm or more and 50 ppm or less.

A diol terminated impurities of the epoxy resin (E) according to the present invention is 0.001 to 30% by mass of a basic structural component of the epoxy resin (E).

In the present invention, the basic structural component of the epoxy resin (E) refers to a structure in which epoxy groups are present in all terminals. The diol terminated impurities of the epoxy resin (E) refers to a structure in which at least one epoxy group of terminal epoxy groups has a structure of an α-glycol terminal. As a reference, mention may be made of the "Review: Epoxy Resin, vol. 1, Basic Part I" published by The Japan Society of Epoxy Resin Technology.

The basic structural component and diol terminated impurities of the epoxy resin (E) are analyzed with reference to a method described in the documents cited in the "Review: Epoxy Resin, vol. 1, Basic Part I" published by The Japan Society of Epoxy Resin Technology.

When the percentage of the diol terminated impurities of the epoxy resin (E) relative to the basic structural component of the epoxy resin (E) is more than 30% by mass, water resistance of a cured product may be reduced, and when it is less than 0.001 % by mass, curability of the epoxy resin composition may be reduced. From such a viewpoint, the percentage of the diol terminated impurities of the epoxy resin (E) relative to the basic structural component of the epoxy resin (E) is preferably from 0.01 to 25% by mass, more preferably from 0.1 to 20% by mass, particularly preferably from 0.5 to 18% by mass, most preferably from 1.2 to 15% by mass.

The percentage of the diol terminated impurities of the epoxy resin (E) relative to the basic structural component of the epoxy resin (E) is determined by the method described in the section of Examples.
As a method for producing a master batch of hardener composition (F) for epoxy resins according to the present invention, mention may be made of a method in which the latent hardener for epoxy resins and/or the microcapsule type hardener (D) for epoxy resins according to the present invention which is previously produced is dispersed in the epoxy resin (E), for example, by use of a three-roll mill or the like; and a method in which a reaction for forming the latent hardener for epoxy resins and/or the microcapsule type hardener (D) for epoxy resins is performed in the epoxy resin (E) to obtain the latent hardener for epoxy resins and/or the microcapsule type hardener (D) for epoxy resins and to simultaneously obtain the master batch of hardener for epoxy resins. The latter method is preferred in terms of productivity.

The master batch of hardener composition for epoxy resins of the present invention is preferably a liquid or paste at room temperature, more preferably has a viscosity of 500,000 mPa·s or less at 25°C, still more preferably 1000 to 300,000 mPa·s, and furthermore preferably 3,000 to 200,000 mPa·s.
The viscosity is preferably 500,000 mPa·s or less, because workability of the hardener composition in such a viscosity is sufficiently high to reduce the amount of the hardener composition to be adhered to a container, thereby allowing reduction of waste.

In the epoxy resin composition of the present invention, it is desirable to prepare an epoxy resin composition in which a cyclic borate ester compound (L) is mixed together with a latent hardener for epoxy resins and/or a microcapsule type hardener (D) for epoxy resins and/or a master batch of hardener composition (F) for epoxy resins.
This can improve storage stability of the epoxy resin composition, in particular, storage stability at elevated temperatures.

The cyclic borate ester compound (L) refers to a compound obtained from boric acid and an aliphatic or aromatic diol, in which boron is contained in a cyclic structure. Examples of such cyclic borate ester compounds include tris-o-phenylene bisborate, bis-dimethyltrimethylene bisborate, bis-dimethylethylene bisborate, and bis-diethylethylene bisborate. Particularly preferred is 2,2'-oxybis(5,5'-dimethyl-1,3,2-dioxaborinane).

The cyclic borate ester compound (L) as described above in an amount of 0.001 to 10 parts by mass, preferably 0.01 to 2 parts by mass, more preferably 0.05 to 0.9 part by mass is contained in 100 parts by mass of the latent hardener for epoxy resins and/or the microcapsule type hardener (D) for epoxy resins and/or the master batch of hardener composition (F) for epoxy resins. Use of the compound (L) in this range provides a composition having curability excellent in storage stability in high temperatures and can provide an excellent cured product which keeps the original short-time curability, heat resistance, and connection reliability.

The master batch of hardener composition (F) for epoxy resins according to the present invention, which comprises the latent hardener for epoxy resins and/or the microcapsule type hardener (D) for epoxy resins and the epoxy resin (E), may also comprises other components within a range that does not reduce the function of the composition. The content of the other components is preferably less than 30% by mass.

An epoxy resin (J) is mixed with the latent hardener for epoxy resins and/or the microcapsule type hardener (D) for epoxy resins and/or the master batch of hardener composition (F) for epoxy resins according to the present invention to obtain a one-pot type epoxy resin composition.

The epoxy resin (J) to be used in the one-pot type epoxy resin composition of the present invention may have not less than two epoxy groups per molecule on average and may be the same as the epoxy resin (E). Examples of the epoxy resin (J) include bisphenol type epoxy resins obtained by glycidylating bisphenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromo bisphenol A, tetrachloro bisphenol A, and tetrafluoro bisphenol A; epoxy resins obtained by glycidylating other divalent phenols such as biphenol, dihydroxynaphthalene, and 9,9-bis(4-hydroxyphenyl)fluorene; epoxy resins obtained by glycidylating trisphenols such as 1,1,1-tris(4-hydroxyphenyl)methane, and 4,4-(1-(4-(1-(4-hydroxyphenyl)-1-methylethyl)phenyl)ethylidene)bisphenol; epoxy resins obtained by glycidylating tetrakis phenols such as 1,1,2,2-tetrakis(4-hydroxyphenyl)ethane; novolak type epoxy resins obtained by glycidylating novolaks such as phenol novolak, cresol novolak, bisphenol A novolak, brominated phenol novolak, and brominated bisphenol A novolak; epoxy resins obtained by glycidylating polyhydric phenols; aliphatic ether type epoxy resins obtained by glycidylating polyhydric alcohols such as glycerin and polyethylene glycol; ether ester type epoxy resins obtained by glycidylating hydroxycarboxylic acids such as p-oxybenzoic acid and β-oxynaphthoic acid; ester type epoxy resins obtained by glycidylating polycarboxylic acids such as phthalic acid and terephthalic acid; amine type epoxy resins such as glycidylated compounds of amine compounds such as 4,4-diaminodiphenyl methane and m-amino phenol and triglycidyl isocyanulate, and alicyclic epoxides such as 3,4-epoxycyclohexylmethyl-3',4'-epoxycyclohexane carboxylate.

The mixing ratio of the latent hardener for epoxy resins and/or the microcapsule type hardener (D) for epoxy resins and/or the master batch of hardener composition (F) for epoxy resins according to the present invention to the epoxy resin (J) is determined in terms of curability and properties of cured products. The latent hardener for epoxy resins and/or the microcapsule type hardener (D) for epoxy resins and/or the master batch of hardener composition (F) for epoxy resins according to the present invention may be used in an amount of preferably 0.1 to 1,000 parts by mass, more preferably 0.2 to 200 parts by mass, still more preferably 0.5 to 30 parts by mass, based on 100 parts by mass of the epoxy resin (J). When the hardener or the hardener composition is used in an amount of 0.1 part by mass or more, it is possible to obtain curing performance that is practically satisfactory. When the hardener or the hardener composition is used in an amount of 100 parts by mass or less, the epoxy resin composition of the present invention is evenly distributed to provide a hardener having a well-balanced curing performance.

Moreover, the master batch of hardener composition (F) for epoxy resins to be used in the present invention may be mixed with a polymeric epoxy resin generally called a phenoxy resin having a self-film forming property.

Moreover, in the present invention, it is desirable to prepare an epoxy resin composition in which the cyclic borate ester compound (L) is mixed together with a mixture of the epoxy resin (J) and the latent hardener for epoxy resins and/or the microcapsule type hardener (D) for epoxy resins and/or the master batch of hardener composition (F) for epoxy resins, wherein 0.001 to 10 parts by mass of the cyclic borate ester compound (L) is mixed with 100 parts by mass of the mixture of the epoxy resin (J) and the latent hardener for epoxy resins and/or the microcapsule type hardener (D) for epoxy resins and/or the master batch of hardener composition (F) for epoxy resins. Use of the compound (L) in this range provides a composition having curability excellent in storage stability in high temperatures and can provide an excellent cured product which keeps the original short-time curability, heat resistance, and connection reliability.

The latent hardener for epoxy resins and/or the microcapsule type hardener (D) for epoxy resins and/or the master batch of hardener composition (F) for epoxy resins used in the present invention may be used in combination with at least one hardener (K) selected from the group consisting of acid anhydrides, phenols, hydrazides and guanidines.

Examples of acid anhydrides include phthalic anhydride, trimellitic anhydride, pyromellitic anhydride, hexahydrophthalic anhydride, tetrahydrophthalic anhydride, 3-chlorophthalic anhydride, 4-chlorophthalic anhydride, benzophenone tetracarboxylic anhydride, succinic anhydride, methylsuccinic anhydride, dimethylsuccinic anhydride, dichlorosuccinic anhydride, methylnadic anhydride, dodecylsuccinic anhydride, chlorendic anhydride, and maleic anhydride. Examples of phenols include phenol novolak, cresol novolak, and bisphenol A novolak. Examples of hydrazides include succinic acid dihydrazide, adipic acid dihydrazide, phthalic acid dihydrazide, isophthalic acid dihydrazide, terephthalic acid dihydrazide, p-oxybenzoic acid dihydrazide, salicylic acid hydrazide, phenylaminopropionic acid hydrazide, and maleic acid dihydrazide. Examples of guanidines include dicyandiamide, methylguanidine, ethylguanidine, propylguanidine, butylguanidine, dimethylguanidine, trimethylguanidine, phenylguanidine, diphenylguanidine, and toluylguanidine.

Of these hardeners (K), preferably used are guanidines and acid anhydrides, more preferably dicyandiamide, hexahydrophthalic anhydride, tetrahydrophthalic anhydride, and methylnadic anhydride.

When the hardener (K) is used, the latent hardener for epoxy resins and/or the microcapsule type hardener (D) for epoxy resins and/or the master batch of hardener composition (F) for epoxy resins according to the present invention is preferably used in an amount of 0.1 to 200 parts by mass based on the hardener (K) in an amount of 1 to 200 parts by mass.
Use of the hardener (K) in this range provides a composition excellent in curability and storage stability and can provide a cured product excellent in heat resistance and water resistance.

Moreover, in the present invention, it is possible to prepare an epoxy resin composition in which the cyclic borate ester compound (L) is mixed together with a mixture of the hardener (K) and the latent hardener for epoxy resins and/or the microcapsule type hardener (D) for epoxy resins and/or the master batch of hardener composition (F) for epoxy resins, wherein 0.001 to 10 parts by mass of the cyclic borate ester compound (L) is mixed with 100 parts by mass of the mixture of the hardener (K) and the hardener (C) for epoxy resins and/or the microcapsule type hardener (D) for epoxy resins and/or the master batch of hardener composition (F) for epoxy resins. Use of the compound (L) in this range provides a composition having curability excellent in storage stability in high temperatures and can provide an excellent cured product which keeps the original short-time curability, heat resistance, and connection reliability.

To the master batch of hardener composition (F) used in the present invention, it is possible, if desired, to add extenders, reinforcements, fillers, conductive fine particles, pigments, organic solvents, reactive diluents, inert diluents, resins, crystalline alcohols, coupling agents, and the like. Examples of suitable fillers include coal tar, glass fiber, asbestos fiber, boron fiber, carbon fiber, cellulose, polyethylene powder, polypropylene powder, quartz powder, mineral silicate, mica, asbestos powder, slate powder, kaolin, aluminum oxide trihydrate, aluminum hydroxide, chalk powder, gypsum, calcium carbonate, antimony trioxide, penton, silica, aerosol, lithopone, baryte, titanium dioxide, carbon black, graphite, carbon nanotube, fullerene, iron oxide, gold, silver, aluminum powder, iron powder, nanosized metallic crystal, and intermetallic compounds. The choice and amount of these fillers is determined according to the intended end use. Examples of the organic solvent include toluene, xylene, methyl ethyl ketone, methyl isobutyl ketone, ethyl acetate, and butyl acetate. Examples of the reactive diluent include butyl glycidyl ether, N,N'-glycidyl-o-toluidine, phenyl glycidyl ether, styrene oxide, ethylene glycol diglycidyl ether, propylene glycol diglycidyl ether, and 1,6-hexanediol diglycidyl ether. Examples of the inert diluent include dioctyl phthalate, dibutyl phthalate, dioctyl adipate, and petroleum hydrocarbon solvents. Examples of the resins include a polyester resin, polyurethane resin, acrylic resin, polyether resin, melamine resin, and modified epoxy resins such as urethane modified epoxy resin, rubber modified epoxy resin, and alkyd modified epoxy resin. Examples of the crystalline alcohols include 1,2-cyclohexanediol, 1,3-cyclohexanediol, 1,4-cyclohexanediol, pentaerythritol, sorbitol, cane sugar, and trimethylolpropane.

The epoxy resin composition used in the present invention comprises, as main components, the latent hardener for epoxy resins, and/or the microcapsule type hardener (D) for epoxy resins, and the epoxy resin (E), and optionally the epoxy resin (J) and the hardener (K). The epoxy resin composition of the present invention provides the desired performance when it is cured by heating. The main components as described herein mean those components mainly involved in the curing reaction by heating and are preferably 60% or more, more preferably 70% or more, of the heat curable components.

Examples of the components of the one-pot type epoxy resin composition not participated in curing include extenders, reinforcements, fillers, conductive materials, pigments, organic solvents, and resins. These components may be preferably used within the range of 0 to 90% by mass based on the total amount of the one-pot type epoxy resin composition.

The epoxy resin composition of the present invention is useful not only as an adhesive and/or a bonding paste and a bonding film but also as a conductive material, an anisotropic conductive material, an insulating material, a sealing material, a coating material, a paint composition, a prepreg, and a thermal conductive material.

The adhesive and/or the bonding paste and the bonding film is useful as a liquid adhesive, a film-type adhesive, a die-bonding material, or the like. The following procedure is an example of the method for producing a film-type adhesive. A solution is prepared in which a solid epoxy resin, a liquid epoxy resin, and a solid urethane resin are dissolved, mixed, and dispersed in toluene so that the content of the resins is 50% by weight. To the solution, is added and dispersed the master batch of hardener composition (F) for epoxy resins according to the present invention in an amount of 30% by weight to prepare a varnish, which is applied, for example, on a polyethylene terephthalate release substrate having a thickness of 50 µm so that the resulting film has a thickness of 30 µm after the removal of toluene by drying. A bonding film, which is inert at ordinary temperature and exhibits adhesiveness by the latent hardener activated by heating, can be obtained after the removal of toluene.

The conductive material is used as a conductive film and a conductive paste. The anisotropic conductive material is used as an anisotropic conductive film and an anisotropic conductive paste. A method of producing them comprises, for example, mixing and dispersing the conductive material or the anisotropic conductive material during the preparation of varnish, applying the resulting dispersion to a release substrate, and then drying the coating film in the production of the bonding film as described above. As conductive particles, use may be made of metal particles such as solder particles, nickel particles, nanosized metal crystals, particles obtained by covering a metal surface with another metal, and copper-silver gradient particles; and particles obtained by covering particles of a resin such as styrene resin, urethane resin, melamine resin, epoxy resin, acrylic resin, phenol resin, and styrene-butadiene resin with a conductive thin film of gold, nickel, silver, copper, solder, or the like. In general, such conductive particles are fine spherical particles of about 1 to 20 µm. The method of forming the film includes, for example, applying the dispersion to a substrate composed of polyester, polyethylene, polyimide, polytetrafluoroethylene or the like, and then drying off the solvent.

The insulating material is used as an insulating adhesive film and an insulating adhesive paste. The insulating adhesive film as an insulating material can be obtained by using the bonding film as described above. The insulating adhesive paste can be obtained by using a sealing material and incorporating an insulating filler selected from the fillers as described above.

The sealing material is useful as a solid sealing material, liquid sealing material and a film-type sealing material. The liquid sealing material is useful as an underfill material, a potting material, and a dam material. The sealing material can be obtained by a production method comprising, for example, uniformly mixing a bisphenol A type epoxy resin, a hardener, for example, methylhexahydrophthalic anhydride as an acid anhydride hardener, and a spherical fused silica powder, and further adding a master batch of hardener composition (F) obtained according to the present invention to the mixture and uniformly mixing the resulting mixture.

Examples of the coating material include coating materials for electronic materials, overcoat materials for covering printed wiring boards, and resin compositions for interlayer isolation of printed circuit boards. An example of the method for producing a coating material is as follows. A 50% solution in MEK is prepared by mixing a filler such as silica selected from fillers to a bisphenol A type epoxy resin, a phenoxy resin, a rubber-modified epoxy resin and the like, followed by mixing a master batch of hardener composition (F) of the present invention. The solution is applied on a polyimide film to a thickness of 50 µm, to which a copper foil is laminated at 60 to 150°C. The resulting laminate can be cured by heating at 180 to 200°C to obtain a laminate with the interlayer thereof coated with an epoxy resin composition.

An example of the method for producing a paint composition is as follows. A bisphenol A type epoxy resin is mixed with titanium dioxide, talc or the like, followed by adding, stirring, and mixing a 1:1 MIBK-xylene solvent mixture to obtain a base resin. A master batch of hardener composition (F) of the present invention can be added to the base resin and uniformly dispersed to obtain an epoxy paint composition.

The prepreg can be obtained by the production method comprising, for example, impregnating a reinforcing substrate with an epoxy resin composition followed by heating. Specifically, examples of the solvent for the varnish used for impregnation include methyl ethyl ketone, acetone, ethyl cellosolve, methanol, ethanol, and isopropyl alcohol. These solvent preferably do not remain in the prepreg. The type of the reinforcing substrate is not particularly limited. Examples thereof include paper, glass cloth, nonwoven glass cloth, aramid cloth, and liquid crystal polymer. The percentage of the resin composition and the reinforcing substrate is also not particularly limited. Typically, it is preferred that the prepreg be prepared so that the resin component is contained in the prepreg in an amount of 20 to 80% by weight.

The following is an example of the method for producing the thermal conductive material. The method comprises mixing and uniformly kneading an epoxy resin as a thermosetting resin, a phenol novolak hardener as a hardener, graphite powder as a thermal conductive filler, and into the resulting mixture, incorporating a master batch of hardener composition (F) of the present invention, thereby capable of obtaining a thermal conductive resin paste.

### Examples

The present invention will be described with reference to Examples. In Examples and Comparative Examples, "parts" or "%" is based on mass if not otherwise specified.
Physical properties of the resins and cured products thereof in the present Examples and Comparative Examples have been evaluated according to the procedures as described below.

(1) Epoxy equivalent weight
The epoxy equivalent weight is the mass (g) of an epoxy resin containing 1 equivalent epoxy group, and it was measured in accordance with JIS K-7236.

(2) Total chlorine content
A sample in an amount of 1 g was dissolved in 25 ml of ethyleneglycol monobutyl ether to obtain a solution, to which was added 25 ml of 1 N KOH solution in propylene glycol followed by boiling for 20 minutes. The total chlorine content was obtained by titrating the resulting solution with aqueous silver nitrate solution.

(3) Total chlorine content of epoxy resins (a1), (C) and (E) and master batch of hardener composition (F) for epoxy resins
The epoxy resin or the epoxy resin composition is repeatedly washed and filtered with xylene until the epoxy resin disappears. Next, the filtrate was evaporated under reduced pressure at 100°C or less to obtain an epoxy resin. The resulting epoxy resin sample in an amount of 1 to 10 g was accurately weighed so that the titre was from 3 to 7 ml and dissolved in 25 ml of ethylene glycol monobutyl ether. To the solution, was added 25 ml of 1 N KOH solution in propylene glycol, followed by boiling the mixture for 20 minutes. The total chlorine content was obtained by titrating the resulting solution with aqueous silver nitrate solution.

(4) Hydrolyzable chlorine content
To 50 ml of toluene was dissolved 3 g of a sample. To the solution, was added 20 ml of 0.1 N KOH solution methanol, followed by boiling the mixture for 15 minutes. The hydrolyzable chlorine content was obtained by titrating the resulting solution with aqueous silver nitrate solution.

(5) Viscosity
Viscosity was measured using a BM type viscometer at 25°C.

(6) FT-IR measurement
Absorbance was measured using FT/IR-660 Plus manufactured by JASCO Corporation.

(7) GPC measurement
GPC was measured in the following measurement conditions. A calibration curve was prepared using polystyrenes each having a molecular weight of 580, 1,060, 1,940, 5,000, 10,050, 21,000 and 50,400 as a reference substance. The calibration curve was used for quantitative determination.
Column: HCL-8120GEL SUPER 1,000, 2,000, 3,000 serial manufactured by Tosoh Corporation
Eluate: Tetrahydrofuran
Flow rate: 0.6 ml/min
Detector: measured at 254 nm using UV8020 manufactured by Tosoh

(8) Determination of basic structural component of epoxy resin (E)
An epoxy resin composition is repeatedly washed and filtered with xylene until the epoxy resin disappears. Next, the filtrate is evaporated under reduced pressure at 100°C or less to obtain an epoxy resin.
The resulting epoxy resin is quantitatively analyzed according to the following procedure. A high performance liquid chromatograph (AS-8021, detector: UV-8020, hereinafter abbreviated as HPLC) manufactured by Tosoh Corporation is used, and Nova-Pak C-18 manufactured by Millipore Corporation is used as a column. As a mobile phase, is used a gradient of water/acetonitrile of 70/30 to 0/100. A detection wavelength of 254 nm was used. The sample is subjected to HPLC analysis to select a condition for separating the sample according to the difference between both types of terminal structures, and the separated liquid is collected using a selector valve. The collected separated liquid is evaporated under reduced pressure for every fraction, and the residue is analyzed by MS. The MS spectrum exhibits base peaks having a difference in mass number of 18. The base peak having a smaller mass number by 18 is recognized as the basic structural component. The area ratio of the peak strength of the basic structural component on the HPLC analysis chart is used for determining the content of the basic structural component of the epoxy resin (E).

(9) Determination of diol terminated impurities of epoxy resin (E)
The separated liquid is analyzed for the diol terminated impurities by the MS in the same manner as in the determination of the basic structural component of the epoxy resin (E). The MS spectrum exhibits base peaks having a difference in mass number of 18. The base peak having a larger mass number by 18 is recognized as the diol terminated impurities. The content of the diol terminated impurities in the epoxy resin (E) relative to that of the basic structural component is determined by the ratio of the area showing the strength of the peak of the diol terminated impurities to the area of the peak strength showing the basic structural component on the HPLC analysis chart. A detection wavelength of 254 nm was used.
The structure of the diol terminated impurities as described herein refers to a structure in which either one or both terminal epoxy groups are ring-opened to form 1,2-glycols.

(10) Separation of microcapsule type hardener (D) for epoxy resins from master batch of hardener (F) for epoxy resins
The master batch of hardener (F) for epoxy resins is repeatedly washed and filtered with xylene until the epoxy resin disappears. Next, washing and filtration with cyclohexane is repeated until xylene disappears. Cyclohexane is filtered out, and the cyclohexane is completely removed and dried at a temperature of 50°C or below.

(11) Gelation time
Gelation time was obtained by the stroke curing method on a hot plate using a Curast meter V manufactured by TS Engineering Inc.

(12) Dispersibility of microcapsule type hardener (D) for epoxy resins in master batch of hardener (F) for epoxy resins
The master batch of hardener (F) for epoxy resins was mixed with toluene so that nonvolatile matter was contained in an amount of 90% and allowed to stand still at 25°C for one hour. The resulting mixture was applied to a glass substrate in a film thickness of 20µ. The number of cissings in the coating film due to agglomerates was counted. The dispersibility was evaluated based on the number of cissings in the coating film due to agglomerates.
The cases where the number of cissings in the coating film was 10 or less, more than 10 up to 30, more than 30 up to 50, and more than 50 were indicated by excellent, good, fair, and poor, respectively.

(13) Pot life of master batch of hardener (F) for epoxy resins
The master batch of hardener (F) for epoxy resins was measured for the viscosity before and after storing it at 40°C for one week. The pot life was determined by the viscosity-increasing ratio. The cases where the viscosity-increasing ratio was 10 or more (or the master batch gelled), 5 or more and less than 10, 2 or more and less than 5, and less than 2 were indicated by poor, fair, good, and excellent, respectively.

(14) Storage stability of one-pot type epoxy resin composition
A one-pot type epoxy resin composition was mixed with a 1:1 ethyl acetate-toluene solvent mixture so as to contain 70% of nonvolatile matter and allowed to stand still at 25°C for one hour. This mixture was applied on an aluminum plate so as to obtain a film having a dry thickness of 30 µ, dried by heating at 70°C for 5 minutes to remove the solvent from the composition, and stored at 50°C for 3 days. FT-IR measurement was performed before and after the storage at 50°C for 3 days to computationally obtain the percentage of the remaining epoxy group.
The remaining percentage of 80% or more was indicated by excellent, not less than 60 mol% to less than 80 mol% by good, not less than 40 mol% to less than 60 mol% by fair, and less than 40 mol% by poor.

(15) Curability of one-pot type epoxy resin composition
Gelation time of a one-pot type epoxy resin composition was measured. The cases where the temperature at which the gelation time is less than 30 minutes was 100°C or less, higher than 100°C to 110°C or less, and higher than 110°C were indicated by good, fair, and poor, respectively.

(16) Solvent resistance of one-pot type epoxy resin composition
A one-pot type epoxy resin composition is produced by mixing 30 parts of a master batch of hardener (F) for epoxy resins with 100 parts of a bisphenol A type epoxy resin (epoxy equivalent weight: 189 g/equivalent, total chlorine content: 1,200 ppm; hereinafter referred to as "epoxy resin (M)"). The one-pot type epoxy resin composition is mixed with a 1:1 (weight ratio) ethyl acetate-toluene solvent mixture so as to contain 70% of nonvolatile matter. Two samples are prepared by allowing the resulting mixture to stand still at 25°C for one hour and at 40°C for one hour, respectively. These samples are evaluated for solvent resistance by measuring the time to gelation using a gelation tester according to JIC C-2104 in the manner as described below. Specifically, a gelation plate is kept at 120°C, on which a sample in an amount of 0.4 ml is placed and then stirred with a stirring bar to measure the time until cobwebbing is not observed, that is, the time to gelation (seconds). At this time, the samples mixed with solvent mixture are measured for the difference between the time to gelation of the sample which was allowed to stand still at 25°C and the time to gelation of that at 40°C. When a one-pot type epoxy resin composition has a higher solvent resistance to the solvent mixture, the difference between the time to gelation of the sample kept at 25°C and that at 40°C is smaller. When a one-pot type epoxy resin composition has a lower solvent resistance, the time to gelation of the sample kept at 40°C is shorter than that at 25°C. The cases where the difference between the time to gelation is 15% or less, from 15 to 25%, from 25 to 50%, and from 50 to 90% were indicated by excellent, good, fair, and poor, respectively. The case where a one-pot type epoxy resin composition is gelled after it was stood still at 40°C for one hour was indicated by very poor.

(17) Short time curability of one-pot type epoxy resin composition
A one-pot type epoxy resin composition is produced by mixing 30 parts of a master batch of hardener (F) for epoxy resins with 100 parts of an epoxy resin (M). The epoxy resin composition was mixed with a 1:1 ethyl acetate-toluene solvent mixture so as to contain 70% of nonvolatile matter and allowed to stand still at 25°C for one hour. This mixture was applied so as to obtain a film having a dry thickness of 30 µ, dried by heating at 70°C for 5 minutes to remove the solvent from the composition to obtain a film-type adhesive composition, which was subjected to thermocompression bonding on a hot plate at 190°C for 30 seconds under a pressure of 30 kg/cm². FT-IR measurement of the film-type adhesive composition was performed before and after the thermocompression bonding to computationally obtain the percentage of the eliminated epoxy group from the ratio of the height of the characteristic peak (around 1608 cm⁻¹) of a benzene ring to the characteristic peak (around 925 cm⁻¹) of an epoxy group to evaluate the rapid curability from the percentage of the reacted epoxy group. The cases where the rate of change was 65% or more, from 65 to 50%, from 50 to 40%, and 40% or less were indicated by excellent, good, fair, and poor, respectively.

(18) Humidity resistance of one-pot type epoxy resin composition
A one-pot type epoxy resin composition is produced by mixing 30 parts of a master batch of hardener (F) for epoxy resins with 100 parts of an epoxy resin (M). The epoxy resin composition was mixed with a 1:1 ethyl acetate-toluene solvent mixture so as to contain 70% of nonvolatile matter and allowed to stand still at 25°C for one hour. This mixture was applied so as to obtain a film having a dry thickness of 30 µ, dried by heating at 70°C for 5 minutes to remove the solvent from the composition to obtain a film-type adhesive composition. This film is treated by standing still in a thermo-hygrostat at 40°C and a humidity of 85% for 2 hours. The total heating value in the DSC analysis of the film samples before and after the treatment is determined. The percentage of the eliminated epoxy group contained in the film-type adhesive composition, which is eliminated by the loss of latency in a high temperature and high humidity condition, is computationally obtained from the rate of change of the total heating value. The lower percentage of the reacted epoxy group was evaluated as better in terms of humidity resistance. The cases where the rate of change was 10% or less, 10 to 20%, 20 to 30%, and more than 30% were indicated by good, fair, poor, and very poor, respectively.

### Production Example 1

### (Production of hardener (A) for epoxy resins)

Two equivalents of a bisphenol A type epoxy resin (epoxy equivalent weight: 185 g/equivalent, total chlorine amount: 1200 ppm; hereinafter referred to as "epoxy resin c-1 "), 0.66 mol of o-dimethylaminomethyl phenol, and 0.33 mole of dimethylamine were reacted in a 1:1 methanol-toluene solvent mixture (resin content: 50%) at 80°C for 8 hours, and then the solvent was evaporated at 180°C under reduced pressure to obtain a solid substance. The solid substance was ground to obtain particles of a hardener a-1 for epoxy resins having an average diameter of 2.5 µm.

### Production Example 2

### (Production of hardener (A) for epoxy resins)

In a 1:1 methanol-toluene solvent mixture (resin content: 50%), was allowed to react 2 equivalents of a bisphenol A type epoxy resin (epoxy equivalent weight: 185 g/equivalent, total chlorine amount: 20 ppm; hereinafter referred to as "epoxy resin c-2") with 1.5 mol of 2-methylimidazole at 80°C for 6 hours, and then the solvent was evaporated at 180°C under reduced pressure to obtain a solid substance. The solid substance was ground to obtain particles of a hardener a-2 for epoxy resins having an average diameter of 3 µm.

### Example 1

To 200 parts of the epoxy resin c-1 as an epoxy resin (C), were added 100 parts of the hardener a-1 for epoxy resins as a hardener (A) for epoxy resins, 1.5 parts of water as an active hydrogen compound (b2), 3 parts of hexamethylenediisocyanate (HMDI) (Duranate (registered trade name) manufactured by Asahi Kasei Chemicals Corporation) as an isocyanate compound (b1-1), and 4 parts of MR 200 ((registered trade name), manufactured by Nippon Polyurethane Industry Co., Ltd.) as an isocyanate compound (b1-2), and the mixture was allowed to react at 40°C for 3 hours under stirring, so that 99 mol% or more of the isocyanate groups have been reacted. Then, the reaction mixture was subjected to shell-forming reaction at 40°C for 20 hours to obtain a master batch of hardener F-1.
A core-shell type hardener was separated from the master batch of hardener F-1 using xylene, dried, and ground to a powder. Then, the powder was placed on a glass plate and subjected to FT-IR measurement to verify that it has groups (x), (y) and (z). In addition, the master batch of hardener F-1 was evaluated for the dispersibility and pot life thereof. Table 1 shows the evaluation results.
To 30 parts of the resulting master batch of hardener F-1, was added 100 parts of the epoxy resin c-1 as an epoxy resin (J) and sufficiently mixed to obtain a one-pot type epoxy resin composition.
The resulting one-pot type epoxy resin composition was evaluated for the storage stability and curability thereof. Table 1 shows the evaluation results.

### Example 2

To 200 parts of the bisphenol F type epoxy resin (epoxy equivalent weight: 165 g/equivalent, total chlorine content: 300 ppm; hereinafter referred to as "epoxy resin c-3 ") as an epoxy resin (C), were added 100 parts of the hardener a-2 as a hardener (A), 2 parts of water as an active hydrogen compound (b2), 1 part of hexamethylenediisocyanate (Duranate (registered trade name) manufactured by Asahi Kasei Chemicals Corporation) as an isocyanate compound (b1-1), and 6 parts of MR 200 ((registered trade name), manufactured by Nippon Polyurethane Industry Co., Ltd.) as an isocyanate compound (b1-2). The resulting mixture was treated in the same manner as in Example 1 to obtain a master batch of hardener F-2, which was treated in the same manner as in Example 1 to verify that it has groups (x), (y) and (z) and was evaluated for the dispersibility and pot life thereof. Further, the master batch of hardener F-2 was put in a plastic cup and stored in an environment of 40°C and a relative humidity 95% for 12 hours with an open lid. After the test, no appearance defects were observed on the master batch, which indicated that it has good humidity resistance.
Further, to 30 parts of the resulting master batch of hardener F-2, was added 100 parts of the epoxy resin c-1 as an epoxy resin (J) and sufficiently mixed to obtain a one-pot type epoxy resin composition, which was evaluated for the storage stability and curability thereof. Table 1 shows the evaluation results.

### Comparative Examples 1 to 3

Master batches of hardener F-3, F-4, and F-5 were obtained in the same manner as in Example 2 using the compositions as shown in Table 1 to evaluate dispersibility and pot life.
Further, to 30 parts of the resulting master batch of hardener F-3, F-4, or F-5, was added 100 parts of the epoxy resin c-1 as an epoxy resin (J) and sufficiently mixed to obtain a one-pot type epoxy resin composition, which was evaluated for the storage stability and curability thereof. Table 1 shows the evaluation results.

**[Table 1]**

| | | Ex. 1 | Ex. 2 | Comp. Ex. 1 | Comp. Ex. 2 | Comp. Ex. 3 |
|---|---|---|---|---|---|---|
| Composition of master batch of hardener | Hardener (A) for epoxy resins | a-1: 100 pts. | a-2: 100 pts. | a-2: 100 pts. | a-2: 100 pts. | a-2: 100 pts. |
| | HMDI (b1-1) | 3 | 1 | 0 | 7 | 0 |
| | MR200 (b1-2) | 4 | 6 | 7 | 0 | 6 |
| | 24A (b1-2) | 0 | 0 | 0 | 0 | 1 |
| | Active hydrogen compound (b2) | water: 1:5 pts. | water: 2 pts. | water: 2 pts. | water: 2 pts. | water: 2 pts. |
| | Epoxy resin (C) | c-1 | c-3 | c-3 | c-3 | c-3 |
| Properties of master batch of hardener | Dispersibility of latent hardener | good | excellent | good | poor | fair |
| | Pot life | good | excellent | fair | poor | poor |
| Properties of one-pot type epoxy composition | Storage stability | good | excellent | poor | poor | fair |
| | Curability | good | good | good | good | good |

| | | | | | | |
|---|---|---|---|---|---|---|
| Epoxy resin c-1: bisphenol A type liquid epoxy resin (epoxy equivalent weight: 185 g/equivalent, total chlorine content: 1,200 ppm) Epoxy resin c-3: bisphenol F type liquid epoxy resin (epoxy equivalent weight: 165 g/equivalent, total chlorine content: 300 ppm) MR-200: polymethylenephenylene polyisocyanate manufactured by Nippon Polyurethane Industry Co., Ltd. 24A: Duranate 24A (manufactured by Asahi Kasei Chemicals Corporation, buret type polyisocyanate derived from hexamethylenediisocyanate, number of average functional groups: 3.4, hexamethylenediisocyanate content: less than 1%) | | | | | | |

### Example 3

To 8 parts of dicyandiamide previously ground into particles having an average particle size of 3 µm as a hardener (K), were added 3 parts by mass of the master batch of hardener F-2 obtained in Example 2, 95 parts of the epoxy resin c-2 as an epoxy resin (J), 5 parts of EP-4023 (CTBN modified epoxy resin manufactured by Adeka Corporation) as an epoxy resin (J) and 20 parts of calcium carbonate, followed by uniformly mixing to obtain a one-pot type epoxy resin composition: The resulting composition had a storage stability represented by "good" and cured at 140°C.

### Example 4

To 100 parts of bisphenol F type epoxy resin (epoxy equivalent weight: 165 g/equivalent, total chlorine amount: 300 ppm), were added 80 parts of methylhexahydrophthalic anhydride and 300 parts of spherical fused silica powder (average particle size: 10 µm) followed by uniform mixing. To the resulting mixture, was added 6 parts of the master batch hardener F-2 obtained in Example 2, followed by uniformly mixing to obtain a liquid sealing material. The liquid sealing material thus obtained was interposed between a substrate and an LSI and heated at 100°C for 3 hours and thereafter at 150°C for 3 hours. As a result, the liquid sealing material was cured and effectively worked as a sealant. The liquid sealing material according to the present composition was also useful as an insulating adhesive paste.

### Example 5

In 30 parts of ethyl acetate, was dissolved 40 parts of bisphenol A type epoxy resin (epoxy equivalent weight: 2,500 g/equivalent) as an epoxy resin (J). To the solution, were added 40 parts of the master batch of hardener F-2 obtained in Example 2 and 20 parts of conductive particles (crosslinked polystyrene plated with gold) having a particle size of 5 µm, followed by uniformly mixing to obtain a one-pot type epoxy resin composition. The resulting composition was applied to a polyester film and ethyl acetate was dried off at 70°C to obtain an anisotropic conductive film.
The obtained anisotropic conductive film was interposed between electrodes and subjected to thermocompression bonding on a hot plate at 200°C for 20 seconds under a pressure of 30 kg/cm². As a result, the electrodes were joined and electrically connected, and the film was useful as an anisotropic conductive material.

### Production Example 3

### (Production of hardener (A) for epoxy resins)

In a 1:1 n-butanol-toluene solvent mixture (resin content: 50%), was allowed to react 1.5 equivalents of a bisphenol A type epoxy resin (epoxy equivalent weight: 185 g/equivalent, total chlorine amount: 1,400 ppm; hereinafter referred to as "epoxy resin a1-1") with 1 equivalent (in terms of active hydrogen) of 2-methylimidazole at 80°C. Then, distillation under reduced pressure was finished when the content of 2-methylimidazole decreased to 0.5% (to the resin component) to obtain a solid hardener for epoxy resins, which was ground to obtain particles of a hardener a-3 for epoxy resins having an average diameter of 2.7 µm.

### Example 6

To 200 parts by mass of the epoxy resin c-1 as an epoxy resin (C), were added 100 parts by mass of the hardener a-3 for epoxy resins, 2 parts by mass of water, 3 parts by mass of 1,8-diisocyanateoctane, and 4 parts by mass of MR-200, and the mixture was allowed to react at 40°C for 3 hours under stirring. The reaction mixture was further subjected to shell-forming reaction at 50°C for 8 hours to obtain a master batch of hardener F-6 for epoxy resins, which was treated in the same manner as in Example 1 to verify that it has groups (x), (y) and (z) and was evaluated for the dispersibility and pot life thereof. Then, 30 parts of the resulting master batch of hardener F-6 for epoxy resins was mixed with 100 parts of the epoxy resin (M) to obtain a one-pot type epoxy resin composition, which was evaluated for the storage stability, curability, solvent resistance, and humidity resistance thereof.
Table 2 shows the obtained results.

### Example 7

To 200 parts by mass of the epoxy resin c-3 as an epoxy resin (C), were added 100 parts by mass of the hardener a-3 for epoxy resins, 1.5 parts by mass of water, 2 parts by mass of HMDI, and 5 parts by mass of MR-200, and the mixture was allowed to react at 40°C for 3 hours under stirring. Then, 0.5 part by mass of cyclic borate ester compound (L) was added to the reaction mixture. The resulting mixture was further subjected to shell-forming reaction at 50°C for 8 hours to obtain a master batch of hardener F-7 for epoxy resins, which was treated in the same manner as in Example 1 to verify that it has groups (x), (y) and (z) and was evaluated for the dispersibility and pot life thereof. Then, 30 parts of the resulting master batch of hardener F-7 for epoxy resins was mixed with 100 parts of the epoxy resin (M) to obtain a one-pot type epoxy resin composition, which was evaluated for the storage stability, curability, solvent resistance, and humidity resistance thereof.
Table 2 shows the obtained results.

### Example 8

To 200 parts by mass of the epoxy resin c-3 as an epoxy resin (C), were added 100 parts by mass of the hardener a-3 for epoxy resins, 2 parts by mass of water, 1 part by mass of HMDI, and 4 parts by mass of MR-200, and the mixture was allowed to react at 40°C for 3 hours under stirring. Then, 1.2 parts by mass of cyclic borate ester compound (L) was added to the reaction mixture. The resulting mixture was further subjected to shell-forming reaction at 50°C for 8 hours to obtain a master batch of hardener F-8 for epoxy resins, which was treated in the same manner as in Example 1 to verify that it has groups (x), (y) and (z) and was evaluated for the dispersibility and pot life thereof. Then, 30 parts of the resulting master batch of hardener F-8 for epoxy resins was mixed with 100 parts of the epoxy resin (M) to obtain a one-pot type epoxy resin composition, which was evaluated for the storage stability, curability, solvent resistance, and humidity resistance thereof. Table 2 shows the obtained results.

### Example 9

To 200 parts by mass of the epoxy resin c-3 as an epoxy resin (C), were added 100 parts by mass of the hardener a-3 for epoxy resins, 2 parts by mass of water, 2 parts by mass of Duranate D-101 manufactured by Asahi Kasei Chemicals Corporation as a urethane type low molecular bifunctional aliphatic isocyanate, and 5 parts by mass of MR-200, and the mixture was allowed to react at 40°C for 3 hours under stirring. Then, 1.2 parts by mass of cyclic borate ester compound (L) was added to the reaction mixture. The resulting mixture was further subjected to shell-forming reaction at 50°C for 8 hours to obtain a master batch of hardener F-9 for epoxy resins, which was treated in the same manner as in Example 1 to verify that it has groups (x), (y) and (z) and was evaluated for the dispersibility and pot life thereof. Then, 30 parts of the resulting master batch of hardener F-9 for epoxy resins was mixed with 100 parts of the epoxy resin (M) to obtain a one-pot type epoxy resin composition, which was evaluated for the storage stability, curability, solvent resistance, and humidity resistance thereof. Table 2 shows the obtained results.

### Comparative Example 4

To 200 parts by mass of the epoxy resin c-3 as an epoxy resin (C), were added 100 parts by mass of the hardener a-3 for epoxy resins, 1.5 parts by mass of water, 5 parts by mass of LTI, and 2 parts by mass of MR-200, and the mixture was allowed to react at 40°C for 3 hours under stirring. Then, the resulting mixture was further subjected to shell-forming reaction at 50°C for 8 hours to obtain a master batch of hardener F-9 for epoxy resins, which was treated in the same manner as in Example 1 to verify that it has groups (x), (y) and (z) and was evaluated for the dispersibility and pot life thereof. Then, 30 parts of the resulting master batch of hardener F-9 for epoxy resins was mixed with 100 parts of the epoxy resin (M) to obtain a one-pot type epoxy resin composition, which was evaluated for the storage stability, curability, solvent resistance, and humidity resistance thereof. Table 2 shows the obtained results.

### Comparative Example 5

To 200 parts by mass of the epoxy resin c-3 as an epoxy resin (C), were added 100 parts by mass of the hardener a-3 for epoxy resins, 1.5 parts by mass of water, 2 parts by mass of LTI, and 5 parts by mass of MR-200, and the mixture was allowed to react at 40°C for 3 hours under stirring. Then, 0.5 part by mass of cyclic borate ester compound (L) was added to the reaction mixture. The resulting mixture was further subjected to shell-forming reaction at 50°C for 8 hours to obtain a master batch of hardener F-10 for epoxy resins, which was treated in the same manner as in Example 1 to verify that it has groups (x), (y) and (z) and was evaluated for the dispersibility and pot life thereof. Then, 30 parts of the resulting master batch of hardener F-10 for epoxy resins was mixed with 100 parts of the epoxy resin (M) to obtain a one-pot type epoxy resin composition, which was evaluated for the storage stability, curability, solvent resistance, and humidity resistance thereof. Table 2 shows the obtained results.

**[Table 2]**

| | | Ex. 6 | Ex. 7 | Ex. 8 | Ex. 9 | Comp. Ex. 4 | Comp. Ex. 5 |
|---|---|---|---|---|---|---|---|
| Composition of master batch of hardener | Hardener (A) for epoxy resins | a-3: 100 pts. | a-3: 100 pts. | a-3: 100 pts. | a-3: 100 pts. | a-3: 100 pts. | a-3: 100 pts. |
| | Low molecular amine compound (e) contained in hardener (A) for epoxy resins | 2-MZ: 0.5 pt. | 2-MZ: 0.5 pt. | 2-MZ: 0.5 pt | 2-MZ: 0.5 pt. | 2-MZ: 0.5 pt. | 2-MZ: 0.5 pt. |
| | HMDI (b1-1) | 0 | 2 | 1 | 0 | 0 | 0 |
| | 1,8-DIO (b1-1) | 3 | 0 | 0 | 0 | 0 | 0 |
| | D-101 | 0 | 0 | 0 | 0 | 2 | 0 |
| | MR200 (b1-2) | 4 | 5 | 4 | 5 | 2 | 5 |
| | LTI (b1-2) | 0 | 0 | 0 | 0 | 5 | 2 |
| | Active hydrogen compound (b2) | water: 2 pts. | water: 1.5 pts. | water: 2 pts. | water: 1.5 pts. | water: 1.5 pts. | water: 1.5 pts. |
| | Epoxy resin (C) | c-1 | c-3 | c-3 | c-3 | c-3 | c-3 |
| | Cyclic borate ester compound (L) | - | 0.5 pt. | 1.2 pts. | - | - | 0.5 pt. |
| Properties of master batch of hardener | Dispersibility of latent hardener | good | excellent | good | good | fair | fair |
| | Pot life | good | excellent | excellent | good | good | good |
| Properties of one-pot type epoxy composition | Storage stability | excellent | excellent | good | good | good | good |
| | Curability | good | good | good | good | fair | good |
| | Solvent resistance | good | excellent | excellent | excellent | good | good |
| | Short time curability | excellent | excellent | excellent | excellent | fair | good |
| | Humidity resistance | good | good | good | good | very poor | poor |

| | | | | | | | |
|---|---|---|---|---|---|---|---|
| Epoxy resin c-1: bisphenol A type liquid epoxy resin (epoxy equivalent weight: 185 g/equivalent, total chlorine content: 1,200 ppm) Epoxy resin c-3: bisphenol F type liquid epoxy resin (epoxy equivalent weight: 165 g/equivalent, total chlorine content: 300 ppm) 2-MZ: 2-methylimidazole 1,8-DIO: 1,8-diisocyanateoctane D-101: Duranate D-101 manufactured by Asahi Kasei Chemicals Corporation) MR-200: polymethylenephenylene polyisocyanate manufactured by Nippon Polyurethane Industry Co., Ltd. LTI: 2,6-diisocyanato hexanoic acid-2-isocyanatoethyl Cyclic borate ester compound (L): 2,2'-oxybis(5,5'-dimethyl-1,3,2-dioxaborinane) | | | | | | | |

### Example of preparation of conductive film

In 20 parts of a 1:1 (weight ratio) methyl ethyl ketone-butyl cellosolve acetate solvent mixture, were dissolved 15 parts of a bisphenol A type epoxy resin (AER-2603 manufactured by Asahi Kasei Chemicals Corporation), 6 parts of a phenol novolak resin (trade name "BRG-558" manufactured by Showa Highpolymer Co., Ltd.), and 4 parts of a synthetic rubber (trade name "Nipol 1072" manufactured by Zeon Corporation, weight average molecular weight: 300,000). With the resulting solution, was mixed 74 parts of a silver powder followed by kneading by means of a three-roll mill. To the resulting mixture, was added 30 parts of the master batch of hardener F-2 for epoxy resins obtained in Example 2 followed by uniformly mixing to obtain a conductive adhesive. The resulting conductive adhesive was cast on a polypropylene film having a thickness of 40 µm and dried at 80°C for 60 minutes to be half-cured to provide a conductive film having a conductive adhesive layer of 35 µm in thickness. Using the conductive film on a heat block of 80°C, the conductive adhesive layer was transferred to the backside of a silicone wafer. Further, the silicone wafer was fully diced, and the semiconductor chip with the conductive adhesive was subjected to bonding and curing to a lead frame on a heat block at a condition of 200°C and 2 minutes. There was no problem in the conductivity of the chip.

### Example of preparation of conductive paste

To 100 parts of an epoxy resin (M), were added 30 parts of the master batch of hardener F-1 obtained in Example 1, 150 g of a flake silver powder (manufactured by Tokuriki Chemical Research Co., Ltd.) having an average particle size of 14 µm and an aspect ratio of 11, and 60 g of a flake nickel powder (trade name "NI110104" manufactured by Kojundo Chemical Lab. Co., Ltd.), followed by stirring to a uniform mixture and uniformly dispersing the mixture by means of a three-roll mill to obtain a conductive paste. The resulting conductive paste was screen-printed on a polyimide film substrate having a thickness of 1.4 mm and then cured by heating at 200°C for one hour. The resulting wiring board was evaluated for the conductivity, and the result showed the usefulness of the conductive paste.

### Example of preparation of anisotropic conductive film

In 30 parts of ethyl acetate, were dissolved 40 parts by weight of bisphenol A type epoxy resin (AER 6097 manufactured by Asahi Kasei Chemicals Corporation, epoxy equivalent weight: 42,500 g/equivalent) and 30 parts by weight of a phenoxy resin (YP-50, manufactured by Tohto Kasei Co., Ltd.). To the solution, were added 30 parts of the master batch of hardener F-2 obtained in Example 2 and 5 parts of conductive particles (crosslinked polystyrene plated with gold) having a particle size of 8 µm, followed by uniform mixing to obtain a one-pot type epoxy resin composition. The resulting composition was applied to a polyester film and ethyl acetate was dried off at 70°C to obtain an anisotropic conductive film.
The obtained anisotropic conductive film was interposed between an IC chip and an electrode and subjected to thermocompression bonding on a hot plate at 200°C for 20 seconds under a pressure of 30 kg/cm². As a result, the electrodes were joined and electrically connected, and the film was useful as an anisotropic conductive material.

Example of preparation of anisotropic conductive paste
To a mixture of 50 parts by weight of a bisphenol A type epoxy resin (AER 6091 manufactured by Asahi Kasei Chemicals Corporation, epoxy equivalent weight: 480 g/equivalent), 50 parts by weight of a bisphenol A type epoxy resin (AER 2603 manufactured by Asahi Kasei Chemicals Corporation), and 5 parts by weight of Micropearl Au-205 (manufactured by Sekisui Chemical Co., Ltd., specific gravity: 2.67), was added 30 parts of the master batch of hardener F-2 obtained in Example 2, followed by uniform mixing to obtain an anisotropic conductive paste. The obtained anisotropic conductive paste was applied to a low alkali glass having ITO electrodes. Using a ceramic tool of 230°C, it was press-bonded and laminated with a test TAB (Tape Automated Bonding) film for 30 seconds at a pressure of 2 MPa. The laminate was evaluated for the resistance between adjacent ITO electrodes, and it was found that the paste was useful as an anisotropic conductive paste.

### Example of preparation of insulating paste

One hundred parts by weight of a bisphenol F type epoxy resin (trade name "YL983U" manufactured by Yuka-Shell Epoxy Co., Ltd.), 4 parts by weight of dicyandiamide, 100 parts by weight of silica powder, 10 parts by weight of phenyl glycidyl ether as a diluent, and 1 part by weight of an organic phosphate (trade name "PM-2" manufactured by Nippon Kayaku Co., Ltd.) were sufficiently mixed and then kneaded by means of a three-roll mill. Further, to the mixture, was added 30 parts by weight of the master batch of hardener F-2 for epoxy resins obtained in Example 2, followed by uniform mixing. The resulting mixture was subjected to vacuum deaeration and centrifugal deaeration to produce an insulating paste. The resulting insulating paste was used to bond a semiconductor chip to a resin substrate by thermal curing at 200°C for one hour, and it was found that the paste was useful as an insulating paste.

### Example of preparation of insulating film

One hundred and eighty parts by weight of a phenoxy resin (trade name "YP-50", manufactured by Tohto Kasei Co., Ltd.), 40 parts by weight of a cresol novolak type epoxy resin (epoxy equivalent weight: 200 g/equivalent, trade name "EOCN-1020-80" manufactured by Nippon Kayaku Co., Ltd.), 300 parts by weight of spherical silica (average particle size: 2 µm, trade name "SE-5101" manufactured by Admatec Co., Ltd.) and 200 parts by weight of methyl ethyl ketone are mixed and uniformly dispersed. To the resulting mixture, is added 250 parts by weight of the master batch of hardener F-1 for epoxy resins obtained in Example 1, followed by agitation and mixing to obtain a solution containing an epoxy resin composition. The resulting solution was applied to a polyethylene terephthalate film having undergone release treatment so that the thickness of the coating after drying is 50 µm, followed by thermal drying in a drier with internal air circulation to obtain an insulating film for bonding semiconductors. The resulting insulating film for bonding semiconductors is cut together with the supporting substrate to a size larger than that of a five-inch wafer, and the resin film is put together with the electrode side of a wafer having a bump electrode. Next, the resulting stack is pressed from the top of the supporting substrate having undergone release treatment and subjected to thermocompression bonding in vacuum at 70°C for a pressing time of 10 seconds under a pressure of 1 MPa to obtain a wafer with the adhesive resin. Subsequently, the wafer with the adhesive resin was cut by means of a dicing saw (DAD-2H6M manufactured by DISCO) at a spindle revolution of 30,000 rpm and a cutting speed of 20 mm/sec. It was observed that the cut and separated pieces of the semiconductor element with the adhesive film showed no peeling of the resin. The resulting film was useful as an insulating film.

### Example of preparation of sealing material

To a uniformly dispersed mixture of 50 parts by weight of a bisphenol A type epoxy resin (AER 6091 manufactured by Asahi Kasei Chemicals Corporation, epoxy equivalent weight: 480 g/equivalent), 50 parts by weight of a bisphenol A type epoxy resin (AER 2603 manufactured by Asahi Kasei Chemicals Corporation), 40 parts by weight of HN-2200 mainly composed of phthalic anhydride (manufactured by Hitachi Chemical Co., Ltd.) as a hardener, and 80 parts by weight of spherical fused silica having an average particle size of 16 µm, is added 5 parts by weight of the master batch of hardener F-1 for epoxy resins obtained in Example 1 to obtain an epoxy resin composition. The resulting epoxy resin composition was applied to a 1 cm square of a printed wiring board so that the coating has a thickness of 60 µm and half-cured by heating in an oven at 110°C for 10 minutes. Then, a 1 cm square silicone chip of 370 µm thick was put on the half-cured epoxy resin composition, followed by applying a load and subjecting to complete curing treatment at 220°C for one hour while keeping contact of the bump with the chip. The resulting sealing material composed of the epoxy resin composition was found to be useful without any problem in appearance and continuity of the chip.

### Example of preparation of coating material

To a mixture of 30 parts of an epoxy resin (M), 30 parts of YP-50 (manufactured by Tohto Kasei Co., Ltd.) as a phenoxy resin, and 50 parts of a methyl ethyl ketone solution of a methoxy group-containing silane modified epoxy resin (trade name "Compoceran E103" manufactured by Arakawa Chemical Industries, Ltd.), was added 30 parts of the master batch of hardener F-1 for epoxy resins obtained in Example 1. The resulting mixture was diluted with methyl ethyl ketone to prepare a solution containing the mixture in an amount of 50% by weight. The prepared solution was applied to a PET (polyethylene terephthalate) release film (SG-1 manufactured by Panac Corporation) by means of a roll coater and cured by drying at 150°C for 15 minutes to prepare a half-cured resin with a release film (dry film) having a thickness of 100 µm. The dry film was subjected to thermocompression bonding to a copper-clad laminate at 120°C for 10 minutes at a pressure of 6 MPa. Then, the resulting product was allowed to cool to room temperature to remove the release film and then cured at 200°C for 2 hours. It was found that the resulting coating material was useful as a coating material for interlayer insulation.

### Example of preparation of paint composition

With 50 parts by weight of a bisphenol A type epoxy resin (AER 6091 manufactured by Asahi Kasei Chemicals Corporation, epoxy equivalent weight: 480 g/equivalent), was mixed 30 parts by weight of titanium dioxide and 70 parts by weight of talc. To the mixture, was added 140 parts of a 1:1 MIBK-xylene solvent mixture as a solvent mixture, followed by stirring and mixing to obtain a main base resin. To the resulting base resin, was added the master batch of hardener F-1 for epoxy resins obtained in Example 1, followed by uniformly dispersing the mixture to obtain a useful epoxy paint composition.

### Example of preparation of prepreg

### Example of prepreg

In a flask placed in an oil bath at a temperature of 130°C, were dissolved 15 parts of a novolak type epoxy resin (EPICLON N-740 manufactured by Dainippon Ink and Chemicals, Incorporated), 40 parts of a bisphenol F type epoxy resin (Epikote 4005 manufactured by JER), and 30 parts of bisphenol A type liquid epoxy resin (AER 2603 manufactured by Asahi Kasei Chemicals Corporation), followed by mixing them and then cooling the mixture to 80°C. Further, 15 parts of the master batch of hardener composition F-1 obtained in Example 1 is added to the resulting mixture, followed by sufficiently stirring to mix the same. The resin composition cooled to room temperature was applied to a release paper using a doctor knife in a mass per unit area of the resin of 162 g/m² to form a resin film. Next, the resin film was overlaid with a CF cloth manufactured by Mitsubishi Rayon Co., Ltd. (model: TR 3110, mass per unit area: 200 g/m²) which was plain-woven from carbon fiber having an elastic modulus of 24 tons/mm² at a weaving density of 12.5 threads/inch to impregnate the carbon fiber cloth with the resin composition. The impregnated carbon fiber cloth was overlaid with a polypropylene film and passed through a pair of rolls having a surface temperature of 90°C to prepare a cloth prepreg. The content of the resin was 45% by weight. The resulting prepreg was further laminated by arranging the fiber direction and subjected to shaping at a curing condition of 150°C for one hour. It was possible to obtain an FRP shaped article in which carbon fiber was used as a reinforcing fiber. The prepared prepreg was found to be useful.

### Example of preparation of thermal conductive epoxy resin composition

After stirring 100 parts of a bisphenol A type epoxy resin (AER 2603 manufactured by Asahi Kasei Chemicals Corporation), 40 parts by weight of a 50% methyl ethyl ketone solution of a phenol novolak resin (trade name "Tamanol 759" manufactured by Arakawa Chemical Industries, Ltd.) as a hardener for epoxy resins, and 15 parts by weight of flake graphite powder (trade name "HOPG" manufactured by Union Carbide Corporation) until a uniform mixture is obtained, these ingredients were uniformly dispersed by means of a three-roll mill. To the resulting dispersion, was added 15 parts of the master batch of hardener composition for epoxy resins obtained in Example 1, followed by sufficient stirring for mixing. The resulting conductive paste was used to mount a semiconductor chip (1.5 mm square, 0.8 mm thick) on a Cu lead frame, followed by curing by heating at 150°C for 30 minutes to obtain a sample for evaluation. The resulting sample is evaluated for the thermal conductivity thereof by a laser flash method. Specifically, the thermal conductivity K was determined from the measured thermal diffusivity α, specific heat Cp and density σ using the equation K=α×Cp×σ and found to be 5×10⁻³ Cal/cm·sec·°C or more. The sample was found to be useful as a thermal conductive paste.

Although the present invention has been described in detail with reference to specific embodiments, it is apparent to those skilled in the art that various changes and modifications can be made without departing from the spirit and scope of the present invention.
The present application is based on the Japanese patent application (JP Application 2005-046615) filed on Feb. 23, 2005, the content of which is herein incorporated by reference.

### Industrial Applicability

The present invention can provide an epoxy resin composition which has both curability and storage stability and also has a well-balanced performance of electrical properties, mechanical strength, thermal resistance, and humidity resistance. The master batch of hardener composition for epoxy resins using the microcapsule type hardener for epoxy resins according to the present invention provides excellent performance as adhesives, sealing materials, fillers, insulating materials, conductive materials, prepregs, film-type adhesives, anisotropic conductive films, anisotropic conductive paste, insulating adhesive films, insulating adhesive paste, underfill materials, potting materials, die-bonding materials, conductive paste, solder resists, thermal conductive materials, and the like.

## Claims

1. A latent hardener for epoxy resins comprising a hardener (A) for epoxy resins and a resin which covers the hardener (A) for epoxy resins, wherein the resin which covers the hardener (A) for epoxy resins comprises, in a main chain structure thereof, a structure (structure (1)) having two nitrogen atoms separated by a linear or cyclic low molecular aliphatic hydrocarbon group containing no ester linkage, at least one of the nitrogen atoms of the structure (1) forming a urea linkage.

2. The latent hardener for epoxy resins according to claim 1, the latent hardener for epoxy resins comprising a hardener (A) for epoxy resins and a resin which covers the hardener (A) for epoxy resins, wherein the resin which covers the hardener (A) for epoxy resins comprises, in a main chain structure thereof, a structure (structure (1)) having two nitrogen atoms separated by a linear or cyclic low molecular aliphatic hydrocarbon group containing no oxygen atom other than oxygen atoms forming a urethane linkage, at least one of the nitrogen atoms of the structure (1) forming a urea linkage.

3. The latent hardener for epoxy resins according to claim 1 or 2, **characterized in that** the hardener (A) for epoxy resins is covered with a film (c1) obtained by reacting an isocyanate component (b1) comprising a low molecular bifunctional aliphatic isocyanate compound in an amount of 1 % by mass or more and 95% by mass or less with an active hydrogen compound (b2).

4. The latent hardener for epoxy resins according to claim 3, **characterized in that** the isocyanate component (b1) comprises a low molecular bifunctional aliphatic isocyanate compound (b1-1) in an amount of 1% by mass or more and 95% by mass or less and an aromatic isocyanate compound (b1-2) in an amount of 5% by mass or more and 99% by mass or less.

5. The latent hardener for epoxy resins according to claim 3 or 4, **characterized in that** the film (c1) has a group (x) capable of absorbing infrared rays of 1630 cm⁻¹ to 1680 cm⁻¹ in wave length and a group (y) capable of absorbing infrared rays of 1680 cm⁻¹ to 1725 cm⁻¹ in wave length.

6. The latent hardener for epoxy resins according to any one of claims 1 to 5, wherein the hardener (A) for epoxy resins comprises an amine type hardener comprising an amine adduct (a) and a low molecular amine compound (e) as main components.

7. The latent hardener for epoxy resins according to claim 6, **characterized in that** the amine adduct (a) is obtained by reacting an epoxy resin (a1) with an amine compound (a2).

8. The hardener for epoxy resins according to claim 6 or 7, **characterized in that** the low molecular amine compound (e) is an imidazole.

9. A microcapsule type hardener for epoxy resins **characterized by** comprising a latent hardener for epoxy resins according to any one of claims 1 to 8 as a core which is covered with a shell (c2) obtained by reacting a hardener (A) for epoxy resins with an epoxy resin (C), the microcapsule type hardener for epoxy resins comprising a group (x) capable of absorbing infrared rays of 1630 cm⁻¹ to 1680 cm⁻¹ in wave length and a group (y) capable of absorbing infrared rays of 1680 cm⁻¹ to 1725 cm⁻¹ in wave length at least on the surface thereof.

10. A master batch of hardener composition (F) for epoxy resins **characterized in that** 10 to 50,000 parts by weight of an epoxy resin (E) is mixed with 100 parts by weight of a hardener for epoxy resins comprising a latent hardener for epoxy resins according to any one of claims 1 to 8 and/or a microcapsule type hardener (D) for epoxy resins according to claim 9.

11. A master batch of hardener composition for epoxy resins **characterized in that** the master batch of hardener composition (F) for epoxy resins according to claim 10 has a total chlorine content of 2,500 ppm or less.

12. The master batch of hardener composition for epoxy resins according to claim 10 or 11, **characterized in that** the epoxy resin (E) has a total chlorine content of 2,500 ppm or less.

13. The master batch of hardener composition for epoxy resins according to any one of claims 10 to 12, **characterized in that** diol terminated impurities of the epoxy resin (E) have 0.001 to 30% by mass of a basic structural component of the epoxy resin (E).

14. An epoxy resin composition in which a cyclic borate ester compound (L) is mixed together with a latent hardener for epoxy resins and/or a microcapsule type hardener (D) for epoxy resins and/or a master batch of hardener composition (F) for epoxy resins according to any one of claims 1 to 13.

15. The epoxy resin composition according to claim 14, wherein the cyclic borate ester compound (L) is 2,2'-oxybis(5,5'-dimethyl-1,3,2-dioxaborinane).

16. The epoxy resin composition according to claim 14 or 15, wherein 0.001 to 10 parts by mass of the cyclic borate ester compound (L) according to claim 14 and/or 15 is mixed with 100 parts by mass of the total amount of the latent hardener for epoxy resins and/or the microcapsule type hardener (D) for epoxy resins and/or the master batch of hardener composition (F) for epoxy resins according to any one of claims 1 to 13.

17. An epoxy resin composition **characterized by** comprising, as main components, 100 parts by mass of an epoxy resin (J) and 0.001 to 1,000 parts by mass of the latent hardener for epoxy resins and/or the microcapsule type hardener (D) for epoxy resins and/or the master batch of hardener composition (F) for epoxy resins according to any one of claims 1 to 13.

18. An epoxy resin composition **characterized in that** 0.001 to 10 parts by mass of a cyclic borate ester compound (L) is mixed with 100 parts by mass of an epoxy resin composition according to claim 17.

19. The epoxy resin composition according to claim 18, wherein the cyclic borate ester compound (L) is 2,2'-oxybis(5,5'-dimethyl-1,3,2-dioxaborinane).

20. An epoxy resin composition comprising, as main components, 1 to 200 parts by mass of at least one hardener (K) selected from the group consisting of acid anhydrides, phenols, hydrazides and guanidines and 0.1 to 200 parts by mass of a latent hardener for epoxy resins and/or a microcapsule type hardener (D) for epoxy resins and/or a master batch of hardener composition (F) for epoxy resins according to any one of claims 1 to 13.

21. An epoxy resin composition **characterized in that** 0.001 to 10 parts by mass of a cyclic borate ester compound (L) is mixed with 100 parts by mass of an epoxy resin composition according to claim 20.

22. The epoxy resin composition according to claim 21, wherein the cyclic borate ester compound (L) is 2,2'-oxybis(5,5'-dimethyl-1,3,2-dioxaborinane).

23. A paste composition **characterized by** comprising a master batch of hardener composition for epoxy resins and/or an epoxy resin composition according to any one of claims 10 to 22.

24. A film-type composition **characterized by** comprising a master batch of hardener composition for epoxy resins and/or an epoxy resin composition according to any one of claims 10 to 22.

25. An adhesive **characterized by** comprising an epoxy resin composition according to any one of claims 14 to 22.

26. A bonding paste **characterized by** comprising an epoxy resin composition according to any one of claims 14 to 22.

27. A bonding film **characterized by** comprising an epoxy resin composition according to any one of claims 14 to 22.

28. A conductive material **characterized by** comprising an epoxy resin composition according to any one of claims 14 to 22.

29. An anisotropic conductive material **characterized by** comprising an epoxy resin composition according to any one of claims 14 to 22.

30. An anisotropic conductive film **characterized by** comprising an epoxy resin composition according to any one of claims 14 to 22.

31. An insulating material **characterized by** comprising an epoxy resin composition according to any one of claims 14 to 22.

32. A sealing material **characterized by** comprising an epoxy resin composition according to any one of claims 14 to 22.

33. A coating material **characterized by** comprising an epoxy resin composition according to any one of claims 14 to 22.

34. A paint composition **characterized by** comprising an epoxy resin composition according to any one of claims 14 to 22.

35. A prepreg **characterized by** comprising an epoxy resin composition according to any one of claims 14 to 22.

36. A thermal conductive material **characterized by** comprising an epoxy resin composition according to any one of claims 14 to 22.
